(19) Europäisches Patentamt
European Patent Office
Office européen des brevets

(11) **EP 3 294 519 B1**

(12) **EUROPÄISCHE PATENTSCHRIFT**

(45) Veröffentlichungstag und Bekanntmachung des Hinweises auf die Patenterteilung:
**25.12.2019 Patentblatt 2019/52**

(21) Anmeldenummer: **16739509.4**

(22) Anmeldetag: **19.07.2016**

(51) Int Cl.:
**B29C 45/76** (2006.01)   **B29C 45/50** (2006.01)
**B29C 45/47** (2006.01)   **B29C 45/57** (2006.01)
**B29C 45/58** (2006.01)   **B29C 45/62** (2006.01)
**B29C 45/77** (2006.01)

(86) Internationale Anmeldenummer:
**PCT/EP2016/067138**

(87) Internationale Veröffentlichungsnummer:
**WO 2017/013097 (26.01.2017 Gazette 2017/04)**

(54) **VERFAHREN ZUM BETREIBEN EINER SPRITZGIESSMASCHINE**

METHOD FOR OPERATING AN INJECTION-MOULDING MACHINE

PROCÉDÉ POUR FAIRE FONCTIONNER UNE MACHINE DE MOULAGE PAR INJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2015 DE 102015111719**

(43) Veröffentlichungstag der Anmeldung:
**21.03.2018 Patentblatt 2018/12**

(73) Patentinhaber: **KraussMaffei Technologies GmbH 80997 München (DE)**

(72) Erfinder:
• **SCHIFFERS, Reinhard**
  **47269 Duisburg (DE)**
• **KRUPPA, Stefan**
  **81541 München (DE)**
• **MOSER, Stefan**
  **85399 Hallbergmoos (DE)**
• **BUSL, Matthias**
  **85757 Karlsfeld (DE)**
• **WORTBERG, Johannes**
  **45481 Mülheim a.d.R. (DE)**

(74) Vertreter: **Wilhelm, Ludwig**
  **KraussMaffei Group GmbH**
  **Krauss-Maffei-Strasse 2**
  **80997 München (DE)**

(56) Entgegenhaltungen:
JP-A- H11 207 792    JP-A- 2006 142 739
US-A- 5 013 231    US-A1- 2004 119 204

**Beschreibung**

Die Erfindung betrifft ein Verfahren zum Betreiben einer Spritzgießmaschine nach dem Oberbegriff des Anspruchs 1.

Die Aufgabenstellung einer Spritzgießmaschine umfasst die diskontinuierliche Herstellung von Formteilen aus vorzugsweise makromolekularen Formmassen, wobei das Urformen unter Druck geschieht [Michaeli, W.: Einführung in die Kunststoffverarbeitung, Hanser, 2010]. Hierzu wird zunächst ein fester Ausgangsrohstoff (Granulat, Pulver, etc.) in einer Dosierphase in einen schmelzförmigen Zustand überführt. Der Rohstoff wird durch Rotation einer Plastifizierschnecke über die Schneckengänge transportiert und verdichtet, so dass er durch Einbringung von Friktionswärme aufgeschmolzen wird. Dabei sammelt sich eine entstehende Schmelze in einem Schneckenvorraum und passiert an der Schneckenspitze eine üblicherweise vorhandene Rückstromsperre, eine Art mechanisches Ventil in Ring- oder Kugelform, das im geöffneten Zustand den Schmelzefluss in Förderrichtung frei gibt.

In einer darauf folgenden Formfüllphase (Einspritzphase und Nachdruckphase) erfolgt die anschließende Formfüllung einer Werkzeugkavität. Hierbei wird die Plastifizierschnecke translatorisch mit der Vorschubgeschwindigkeit $v_{inj}$ bewegt und fungiert als Kolben, der die Schmelze über einen Angusskanal in die Kavität einspritzt. Im Verlauf der Einspritzphase schließt sich die Rückstromsperre durch den resultierenden Massedruck $p_s$ und/oder durch Reibung an der Zylinderwand. Der Schließzeitpunkt selbst ist schwierig zu bestimmen und bleibt oft Undefiniert, da dieser von vielen Faktoren abhängig ist. Allerdings trägt ein reproduzierbarer Schließzeitpunkt maßgeblich zu einer wiederholgenauen volumetrischen Füllung der Kavität bei. Schließt die Rückstromsperre zu einem späteren Zeitpunkt, fließt mehr Schmelze in die Schneckengänge zurück.

Aus den Druckschriften US 5,013,231, JP 2006/142739 A1, US 2004/119204 A1 und JP H11 207792 A sind Verfahren bekannt, bei denen während des Einspritzvorganges eine Plastifizierschnecke sowohl translatorisch wie auch rotatorisch angetrieben wird.

Aus der US 7,713,049 B2 ist ein Verfahren bekannt, welches sich den Rückfluss der Schmelze in die Schneckengänge zu Nutzen macht. Bedingt durch Flanken auf der Schnecke, wirkt dabei ein Drehmoment auf die Schnecke, welches gut messbar ist und eine Aussage über den Schließzeitpunkt einer Rückstromsperre gibt. Allgemein wird die Schnecke bei der translatorischen Einspritzbewegung rotatorisch fest in Lage gehalten. Dies geschieht bei hydraulisch angetriebenen Spritzgießmaschinen über das Einschließen des Ölstroms über ein Ventil am Hydromotor und bei elektromechanisch angetriebenen Spritzgießmaschinen über den Plastifizierantrieb, der mittels Lageregelung die Plastifizierschnecke an einer Rotation hindert. Bei Duroplast- oder PVC-Schnecken wird auf den Einsatz einer Rückstromsperre verzichtet, da die Nachteile den Nutzen überwiegen. Ein bewegliches Bauteil im Schneckenvorraum bedingt Totstellen, an denen sich Schmelze ablagert und abbaut und beispielsweise zu schwarzen Punkten in glasklaren Materialen führt. Bei Nichtthermoplasten vernetzt unter Umständen das Material schnell, so dass es einer zügigen Demontage der Plastifiziereinheit bedarf. Auch hier ist eine Rückstromsperre ungeeignet, so dass ein Rückfluss der Schmelze in die Schneckengänge in Kauf genommen werden muss.

Aus der DE 10 2005 007 747 B3 ist ein Verfahren für elektromechanisch angetriebene Spritzgießmaschinen mit Rückstromsperre bekannt, bei dem parallel beide Antriebsmotoren betrieben werden, um eine höhere Einspritzgeschwindigkeit zu erzielen und gleichzeitig die Plastifizierzeit zu verkürzen. Es wird auf die übliche Ausgestaltung einer Rückstromsperre in einer Spritzgießmaschine hingewiesen, welche ein Drehen des Plastifizierantriebs in der gesamten Einspritzphase ausschließt, da diese dann nicht mehr funktionsgerecht schließen kann. Erst wenn ein gewisser Einspritzdruck vor der Rückstromsperre aufgebaut ist, soll gedreht werden, um die teilgefüllten Schneckengänge wieder zu befüllen.

Die DE 4 344 335 C2 beschreibt die konstruktive Notwendigkeit des Drehens von Einspritz- und Plastifizierantrieb mit gleicher Geschwindigkeit, um die Plastifizierschnecke ohne Drehung zu bewegen. Bedingt durch die Kopplung beider Antriebe mittels einer Hohlwelle, bewegt sich die Plastifizierschnecke in axiale Richtung, wenn der Dosierantrieb die Spindelmutter hält oder sogar in Gegenrichtung bewegt, während der Einspritzantrieb dreht. Zum Einspritzen hält der Dosiermotor die Antriebswelle drehfest und der Einspritzmotor leitet die axiale Verschiebung der Plastifizierschnecke über die Spindelmutter ein. Nachteilig dabei ist, dass dabei jede Betriebsart des Einspritzmotors den Betrieb des Dosiermotors erfordert.

Die EP 1 162 053 B1 hat für ein solches Antriebskonzept zum Ziel, durch Bewegung beider Antriebe, die Einspritzleistung zu erhöhen oder bei gleicher Einspritzleistung die Auslegung der Motoren zu reduzieren. Dazu ist zwischen den Wellen der beiden Motoren eine lösbare Kupplungsvorrichtung vorgesehen, was ein Drehen und Verschieben der Plastifizierschnecke unabhängig voneinander möglich macht. Für die Einspritzbewegung können z.B. beide Motoren gekoppelt werden, so dass die Leistung beider Motoren in der Einspritzphase zur Verfügung steht.

Spritzgießmaschinen über den Plastifizierantrieb, der mittels Lageregelung die Plastifizierschnecke an einer Rotation hindert. Bei Duroplast- oder PVC-Schnecken wird auf den Einsatz einer Rückstromsperre verzichtet, da die Nachteile den Nutzen überwiegen. Ein bewegliches Bauteil im Schneckenvorraum bedingt Totstellen, an denen sich Schmelze ablagert und abbaut und beispielsweise zu schwarzen Punkten in glasklaren Materialen führt. Bei Nichtthermoplasten vernetzt unter Umständen das Material schnell, so dass es einer zügigen Demontage der Plastifiziereinheit bedarf. Auch hier ist eine Rückstromsperre ungeeignet, so dass ein Rückfluss der Schmelze in die Schneckengänge in Kauf genommen werden muss.

Aus der DE 10 2005 007 747 B3 ist ein Verfahren für elektromechanisch angetriebene Spritzgießmaschinen mit Rückstromsperre bekannt, bei dem parallel beide Antriebsmotoren betrieben werden, um eine höhere Einspritzgeschwindigkeit zu erzielen und gleichzeitig die Plastifizierzeit zu verkürzen. Es wird auf die übliche Ausgestaltung einer Rückstromsperre in einer Spritzgießmaschine hingewiesen, welche ein Drehen des Plastifizierantriebs in der gesamten Einspritzphase ausschließt, da diese dann nicht mehr funktionsgerecht schließen kann. Erst wenn ein gewisser Einspritzdruck vor der Rückstromsperre aufgebaut ist, soll gedreht werden, um die teilgefüllten Schneckengänge wieder zu befüllen.

Die DE 4 344 335 C2 beschreibt die konstruktive Notwendigkeit des Drehens von Einspritz- und Plastifizierantrieb mit gleicher Geschwindigkeit, um die Plastifizierschnecke ohne Drehung zu bewegen. Bedingt durch die Kopplung beider Antriebe mittels einer Hohlwelle, bewegt sich die Plastifizierschnecke in axiale Richtung, wenn der Dosierantrieb die Spindelmutter hält oder sogar in Gegenrichtung bewegt, während der Einspritzantrieb dreht. Zum Einspritzen hält der Dosiermotor die Antriebswelle drehfest und der Einspritzmotor leitet die axiale Verschiebung der Plastifizierschnecke über die Spindelmutter ein. Nachteilig dabei ist, dass dabei jede Betriebsart des Einspritzmotors den Betrieb des Dosiermotors erfordert.

Die EP 1 162 053 B1 hat für ein solches Antriebskonzept zum Ziel, durch Bewegung beider Antriebe, die Einspritzleistung zu erhöhen oder bei gleicher Einspritzleistung die Auslegung der Motoren zu reduzieren. Dazu ist zwischen den Wellen der beiden Motoren eine lösbare Kupplungsvorrichtung vorgesehen, was ein Drehen und Verschieben der Plastifizierschnecke unabhängig voneinander möglich macht. Für die Einspritzbewegung können z.B. beide Motoren gekoppelt werden, so dass die Leistung beider Motoren in der Einspritzphase zur Verfügung steht.

Aus der gattungsgemäßen US 7,291,297 B2 ist ein Verfahren für Spritzgießmaschinen mit Rückstromsperre beschrieben, bei dem sowohl Einspritz- als auch Dosierantrieb parallel betrieben werden. Das Verfahren beschreibt einen Spritzgießzyklus bei dem sowohl während der axialen Einspritzbewegung der Plastifizierschnecke, als auch im übrigen Zyklus, parallel der Dosierantrieb die Plastifizierschnecke mit variabler Drehzahl dreht. Das Verfahren sieht vor, nach Möglichkeit die Plastifizierschnecke über den gesamten Zyklus drehen zu lassen. In der Dosierphase hat dies den Vorteil, dass Losreißmomente für die Anfahrbewegung reduziert werden, da die Plastifizierschnecke bereits in rotatorischer Bewegung ist. Noch während der Einspritzphase wird Material aufdosiert, was wiederum die Plastifizierzeit verkürzt, da kontinuierlich Material dosiert wird. Das einzuspritzende Schmelzevolumen im Schneckenvorraum bleibt aber während der Einspritzphase und der Nachdruckphase stets durch die Rückstromsperre vom Dosiervolumen getrennt. Somit ist das offenbarte Verfahren hinsichtlich der Konstanz der Formfüllung vom Schließverhalten der eingesetzten Rückstromsperre abhängig. Dies wird als nachteilig empfunden, da insbesondere ein nicht genau zu bestimmender Schließzeitpunkt der Rückstromsperre wesentlichen Einfluss auf eine, volumetrisch korrekte Formfüllung haben kann.

Die DE 3 021 978 C2 beschreibt ein Verfahren zum Regeln einer Spritzgießmaschine mit einem in programmierten Einspritz- und Nachdruckphasen hydraulisch betätigtem Spritzkolben. Dabei wird angegeben, das vor Erreichen eines Siegelpunktes von der Nachdruckphase auf die Erstarrungsphase umgeschaltet wird, indem der zum Zeitpunkt der Umschaltung anstehende Ist-Wert des Hydraulikdruckes oder des Druckes im Spritzkolbenvorraum als Start-Sollwert für die Hydraulik-Druckregelung oder für die Spritzkolbenvorraum-Druckregelung der Erstarrungsphase dient. Eine Rückstromsperre verhindert das Zurückströmen der Kunststoffschmelze in die Schneckengänge.

Die DE 4 238 277 C2 betrifft eine Mehrzonenschnecke zum Spritzgießen von Formmassen auf Kunststoffbasis mit einem Schneckenkern und einem wendelförmig darauf verlaufenden Schneckensteg und konstantem Schneckendurchmesser, wobei der Schneckenkern Längsabschnitte von unterschiedlichem, abschnittsweise konstantem oder sich änderndem Durchmesser aufweist, so dass entlang der Gesamtlänge der Plastifizierschnecke mehrere Zonen unterschiedlicher Schneckensteghöhen vorhanden sind.

Die DE 10 2006 033 507 A1 beschreibt eine Kunststoff-Plastifiziereinrichtung, im Besonderen eine Mehr-Zonen-Schnecke ohne Rückstromsperre mit sich kegelig verjüngendem Schneckenkern. Bei der Verarbeitung relativ niedrigviskoser Produkte und beim Vorliegen besonders langer Fließwege im Formwerkzeug kann es bei solchen Standard-Dreizonenschnecken beim Einspritzvorgang leicht zum unerwünschten und undefinierten Rückströmen der Schmelze in die Schneckengänge kommen, was zu einer Minderung der Qualität oder zum Unbrauchbarwerden des Formteils und zu einer negativen Beeinträchtigung der Spritzgießmaschine beispielsweise durch Verstopfen des Angusskanals führen kann. Insbesondere wenn die Schmelze einer starken Kompression unterworfen wird und gleichzeitig eine zu geringe Materialabnahme am Werkzeug erfolgt, entsteht an der Austrittsstelle des Materials aus der Plastifizierschnecke ein Rückstau. Es ist nun zwar gelungen, dieses Problem durch den Einbau einer Rückstromsperre am vorderen Ende der Plastifizierschnecke mehr oder weniger gut in den Griff zu bekommen, wobei die Rückstromsperre sich beim Plastifizieren nach vorne schiebt und die Schmelze durchlässt, während sie beim Einspritzen nach hinten gedrückt wird und so den Schneckenvorraum absperrt.

Die üblichen Rückstromsperren sind aufwendige Bauteile, welche die Plastifiziereinheit verkomplizieren, reparaturanfälliger machen und nicht unbedeutend verteuern. Eine Rückstromsperre wie sie im Stand der Technik verwendet wird besitzt nachfolgend näher erläuterte Nachteile.

Die Rückstromsperre ist ein mechanisches Bauteil. Als solches unterliegt es Verschleiß und ist für Prozessschwankungen durch einen ungleichmäßigen Schließvorgang verantwortlich. Mit der Zeit ändern sich Geometrie und Abmaße, sowohl in der Länge als auch im Innen- und Außendurchmesser, wodurch der Schließzeitpunkt variiert. In den meisten Spritzgießprozessen wird bei einer festeingestellten Position von der Einspritzphase in die Nachdruckphase umgeschaltet, was bei einer sich über die Zeit veränderten Rückstromsperren-Geometrie zu unterschiedlichem Füllvolumen in der Kavität führt. Dementsprechend müssen Einstellparameter nachgeführt werden. Rückstromsperren bilden zudem auch ein Strömungshindernis. Bei ihrem Einsatz können "tote Ecken" entstehen, die zu Verweilzeitunterschieden der Schmelze und damit zu thermischen Schädigungen des Materials führen können. Darüber hinaus erhöhen Rückstromsperren auch den Strömungswiderstand, verursachen eine größere Scherung und sind damit unter Umständen auch für Materialschädigungen verantwortlich. Diese negativen Einflüsse werden beim Spritzgießen von thermisch empfindlichen Thermoplasten, wie z. B. PVC, und Duroplasten besonders deutlich. Zur Verarbeitung dieser Materialien werden Schnecken oft auch ohne Rückstromsperren eingesetzt, und ein gewisser undefinierter und unerwünschter Schmelzerückfluss wird in Kauf genommen.

Des Weiteren mangelt es den bekannten Dreizonenschnecken an einer für die Verarbeitung bezüglich der Verarbeitungstemperatur empfindlicher Substanzen hinreichenden Thermostatisierbarkeit entlang der Plastifizierschnecke. Plastifizierschnecken sind mittels üblicherweise am Plastifizierzylinder angebrachter Heizelemente thermostatisierbar. Zu Beginn eines Schusses wird die gesamte Plastifizierschnecke in der Regel einmal auf die erwünschte Schmelztemperatur des zu verarbeitenden Kunststoffmaterials gebracht. Danach aber ist im Wesentlichen keine Zusatzheizung mehr erforderlich, weil die Temperatur durch die Friktion und Dissipation aufrechterhalten wird. Die Eigenarbeit der Plastifizierschnecke (Reibung, Scherrotation, Eigenrotation) liefert ca. 70% der benötigten Wärme. Ein Nachteil dieser entstehenden Wärme ist allerdings, dass es sich um unkontrollierbare Wärme handelt. Liegt die erreichbare Temperaturkonstanz des thermoplastischen Kunststoffmaterials bei der Verarbeitung empfindlicher Materialien außerhalb einer relativ engen Toleranz, so hat dies zur Folge, dass z.B. bei zu niedrigen Temperaturen eine unzureichend fließfähige, also zu hochviskose, Masse eingespritzt wird und die Kavität nicht vollständig gefüllt wird.

Prozessschwankungen prägen sich im Besonderen durch ein Aufbereiten von schmelzflüssigem Kunststoff mit unterschiedlicher Schmelzequalität aus. Die Schmelzequalität wird primär durch den verwendeten Rohstoff (MFI=melt flow index (Schmelzefließindex), Rezyklat-Anteil, Trocknungsgrad, etc.), die Verarbeitungstemperatur und den Einspritzdruck bestimmt. Der Prozess erfährt bei einer Schwankung einen veränderten Einspritzdruckbedarf, welcher nötig ist um die Kavität(en) eines Werkzeuges über Anguss oder Heißkanal korrekt mit Schmelze zu füllen. Es resultieren dabei ein verändertes Fließverhalten und damit oft auch ein ungleichmäßiges Schließen der Rückstromsperre, das heißt es treten unterschiedliche Schließzeitpunkte der Rückstromsperre auf, was wiederrum eine Änderung des eingebrachten Volumens in die Kavität mit sich bringt. Ebenfalls kommt es zu einer Änderung des Schlussvolumens, wenn nach dem Dosieren Kunststoffschmelze nach der Kompressionsentlastung aus einer Meteringzone der Plastifizierschnecke in den Schneckenvorraum fließt. Systembedingt kommt es zu größeren Schwankungen des Schließverhaltens der Rückstromsperre, wenn die Form mit niedriger Einspritzgeschwindigkeit gefüllt wird, da der Sperring oder die Zentralkugel der Rückstromsperre ungleichmäßiger bewegt werden. Ohne Verwendung einer Rückstromsperre fließt Material undefiniert und unerwünscht in die Schneckengänge zurück. Die Folge ist ebenfalls ein reduziertes Schussvolumen und eine unzureichende oder ungleichmäßige Formfüllung.

Aufgabe der Erfindung ist es daher, ein Verfahren zum Betreiben einer Spritzgießmaschine anzugeben, welches es möglich macht, das Schussvolumen über eine Vielzahl von Spritzgießzyklen in erhöhtem Maße konstant zu halten. Eine weitere Aufgabe der Erfindung ist es, ein Verfahren zum Betreiben einer Spritzgießmaschine anzugeben, welches bei erhöhter Konstanz des Spritzgießprozesses über eine Vielzahl von Spritzgießzyklen, insbesondere bei verbesserter Konstanz der volumetrischen Formfüllung, auch ohne Rückstromsperre auskommt.

Diese Aufgaben werden mit einem Verfahren mit den Merkmalen des Anspruchs 1 gelöst. Vorteilhafte Ausführungsformen sind in den vom Anspruch 1 abhängigen Unteransprüchen 2 bis 21 angegeben.

Ein erfindungsgemäßes Verfahren zum Betreiben einer Spritzgießmaschine, die zumindest eine Plastifiziereinrichtung mit zumindest einer Plastifizierschnecke aufweist, welche um eine Schneckenlängsachse rotatorisch und entlang der Schneckenlängsachse translatorisch bewegbar antreibbar ist, wobei mittels der Plastifiziereinrichtung Kunststoffschmelze zum Einspritzen in eine Formkavität in einem Schneckenvorraum bereitgestellt wird, ist dadurch gekennzeichnet, dass zum Einspritzen der Kunststoffschmelze in die Formkavität, d. h. zumindest während einer Einspritz- und Nachdruckphase eines Spritzgießzyklus die Plastifizierschnecke sowohl translatorisch als auch rotatorisch aktiv mittels zumindest einer Antriebseinrichtung angetrieben wird, wobei der rotatorische Antrieb der Plastifizierschnecke mit einer Drehzahl $n_{scr}$ derart erfolgt, dass ein Rückstrom $\dot{m}_{druck}$ der Schmelze vom Schneckenvorraum zurück in Schneckengänge der Plastifizierschnecke aufgrund einer translatorischen Einspritz- und/oder Nachdruckbewegung der Plastifizierschnecke durch einen durch die Rotation der Plastifizierschnecke bewirkten, definierten Gegenförderstrom $\dot{m}_{schlepp}$ überlagert wird, wobei ein Differenzstrom $\dot{m}_{\Delta}$ aus Rückstrom $\dot{m}_{druck}$ und Gegenförderstrom $\dot{m}_{schlepp}$ entsteht und der Differenzstrom

$\dot{m}_\Delta$ zumindest während der Einspritzphase durch Beeinflussung der Drehzahl $n_{scr}$ beeinflusst wird. Dabei kann der Differenzstrom $\dot{m}_\Delta$ beispielsweise über die Einspritzzeit oder über einen Einspritzhub konstant gehalten werden oder einen vorbestimmten, insbesondere gewünschten Verlauf, z. B. abhängig vom Verlauf des Einspritzdruckes während eines Zyklus einnehmen. Das erfindungsgemäße Verfahren wird ohne eine Verwendung einer Rückstromsperre durchgeführt.

Im Kern basiert die Erfindung also auf der Erkenntnis, dass durch die Rotation der Plastifizierschnecke zumindest während der Einspritzphase ein Freiheitsgrad entsteht, mittels dem Einfluss auf Prozessgrößen eines Spritzgießzyklus genommen werden kann. Wesentlich dabei ist, dass einem Rückstrom $\dot{m}_{druck}$ ein Gegenförderstrom $\dot{m}_{schlepp}$ durch Rotation der Plastifizierschnecke zumindest während der Einspritzphase überlagert wird, so dass ein Differenzstrom $\dot{m}_\Delta$ entsteht, dessen absolute Größe von untergeordneter Bedeutung ist, der aber über den Antrieb der Plastifizierschnecke mit einer Drehzahl $n_{scr}$ beeinflussbar ist. Dieser Differenzstrom $\dot{m}_\Delta$ kann während der Einspritzphase entweder konstant gehalten werden oder durch Anpassung der Drehzahl $n_{scr}$ einem vorbestimmten Verlauf folgen.

Mit dieser Erkenntnis gelingt es, auf eine Rückstromsperre mit ihren Unzulänglichkeiten hinsichtlich der Bestimmung des Schließzeitpunktes der Rückstromsperre aber auch deren nachteilige Verschleißneigung zu verzichten. Vielmehr wird nun im Rahmen der Erfindung durch Rotation der Plastifizierschnecke eine aktive Einflussmöglichkeit auf einen Prozessablauf eines Spritzgießzyklus zur Verfügung gestellt. Rückstromsperren hingegen, wie sie im Stand der Technik eingesetzt werden, sind als passive Bauteile, insbesondere hinsichtlich ihres Schließverhaltens von außen nicht beeinflussbar. Selbst die zuverlässige Bestimmung eines Schließzeitpunkts einer Rückstromsperre fällt im Stand der Technik schwer. Diese Schwierigkeiten werden durch die Erfindung dadurch umgangen, dass gänzlich auf eine Rückstromsperre verzichtet werden kann.

Bei einer bevorzugten Ausführungsform ist der Differenzstrom $\dot{m}_\Delta$ während der Einspritzphase größer als Null, was bedeutet, dass durch die Rotation der Plastifizierschnecke während der Einspritzphase und/oder während der Nachdruckphase zusätzliche Schmelze dem Schneckenvorraum zugeführt wird. Dies erfolgt unter momentan im Schneckenvorraum herrschendem Massedruck $p_s$. Bei dieser Ausführungsform kann die Antriebsleistung der Antriebseinrichtung zum rotatorischen Antrieb der Plastifizierschnecke zusätzlich zur Antriebsleistung der Antriebseinrichtung für den translatorischen Antrieb der Plastifizierschnecke genutzt werden.

Alternativ dazu kann der Differenzstrom $\dot{m}_\Delta$ null sein, was gleichbedeutend damit ist, dass der Rückstrom $\dot{m}_{druck}$ im Verhältnis zum Gegenförderstrom $\dot{m}_{schlepp}$ gleichgroß ist.

Bei dieser Ausführungsform wird die Plastifizierschnecke hinsichtlich ihrer Drehzahl $n_{scr}$ so angesteuert oder geregelt betrieben, dass ein Differenzstrom $\dot{m}_\Delta$ der Größe 0 entsteht. Dies entspricht einer ideal funktionierenden Rückstromsperre ohne Leckageverluste. Eine derartige Prozessführung bietet sich insbesondere dann an, wenn mittels des erfindungsgemäßen Verfahrens eine ideal schließende Rückstromsperre simuliert werden soll.

Weiterhin alternativ kann der Differenzstrom $\dot{m}_\Delta < 0$ sein, was gleichbedeutend damit ist, dass der Rückstrom $\dot{m}_{druck}$ größer als der Gegenförderstrom $\dot{m}_{schlepp}$.

Bei dieser Ausführungsform des erfindungsgemäßen Verfahrens verbleibt ein Differenzstrom $\dot{m}_\Delta$, der zurück in die Schneckengänge gerichtet ist. Eine solche Prozessführung hat den Vorteil, dass für den rotatorischen Antrieb der Plastifizierschnecke eine geringere Antriebsleistung erforderlich ist, da diese mit geringerer Drehzahl $n_{scr}$ angetrieben werden muss. Dies hat weiterhin den Vorteil, dass während der Einspritzphase und/oder der Nachdruckphase in der Plastifizierzone der Plastifizierschnecke eine geringere Materialbeanspruchung vorliegt. Trotz allem ist mit einer derartigen Prozessführung die Erfindung vorteilhaft durchführbar, da es im Wesentlichen darauf ankommt, den Differenzstrom $\dot{m}_\Delta$ definiert einstellen zu können, um so unscharfe Prozessverläufe, wie sie beispielsweise durch eine Rückstromsperre verursacht werden, auszuschalten.

Ob der Differenzstrom $\dot{m}_\Delta$ größer oder kleiner als null oder gleich null ist, kann in besonders vorteilhafter Weise materialabhängig oder bauteilabhängig oder dergleichen angepasst und eingestellt werden.

In einer zweckmäßigen Ausgestaltung wird die Größe des Gegenförderstroms $\dot{m}_{schlepp}$ in Förderrichtung über die Drehzahl $n_{scr}$ der Plastifizierschnecke beeinflusst.

Bevorzugt wird die Drehzahl $n_{scr}$ in Abhängigkeit von zumindest einer Schmelzekenngröße bestimmt und gesteuert und/oder geregelt oder die Drehzahl $n_{scr}$ wird während der Einspritz- und/oder während der Nachdruckphase eines einzelnen Zyklus adaptiv an die zumindest eine Schmelzekenngröße angepasst.

In dieser bevorzugten Ausführungsform kommt der durch die Erfindung neu gewonnene Freiheitsgrad voll zum Tragen. Die Drehzahl $n_{scr}$ kann in Abhängigkeit von Schmelzekenngrößen zyklusindividuell und/oder bauteilindividuell eingestellt werden.

Als geeignete Schmelzekenngrößen können beispielsweise der Massedruck $p_S$ gemessen im Schneckenvorraum oder am kolbenseitigen Ende der Plastifizierschnecke, die Schmelzeviskosität $v_S$ oder die Schmelzetemperatur $T_S$ verwendet werden. Hierbei handelt es sich durchweg um leicht an der Spritzgießmaschine messbare oder aus messbaren Größen leicht errechenbare Schmelzekenngrößen, die mit geringen Ungenauigkeiten behaftet sind und zur Beeinflussung der Drehzahl $n_{scr}$ und somit des Differenzstroms $\dot{m}_\Delta$ beitragen.

Der Rückstrom $\dot{m}_{druck}$, der Gegenförderstrom $\dot{m}_{schlepp}$ und der daraus resultierende Differenzstrom $\dot{m}_\Delta$ können

Masseströme oder Volumenströme der Schmelze sein.

Bevorzugt können in Abhängigkeit der absoluten Größe des Differenzstromes $\dot{m}_\Delta$ die translatorische Hubbewegung der Plastifizierschnecke zumindest während der Einspritzphase derart beeinflusst werden, dass der translatorische Hubweg der Plastifizierschnecke im Vergleich zu einer theoretischen Nulllage vergrößert wird, wenn der Differenzstrom $\dot{m}_\Delta < 0$ ist oder der Hubweg der Plastifizierschnecke gegenüber einer theoretischen Nulllage verkürzt wird, wenn der Differenzstrom $\dot{m}_\Delta > 0$ ist.

Diese Maßnahmen ermöglichen es, die Variabilität einer bestimmten Schnecken-/Zylinderkombination hinsichtlich des Schussgewichtes zu vergrößern, da sowohl kleinere als auch größere als die idealen Schussgewichte dieser Schnecken-/Zylinderkombination erreicht werden können.

In einer weiter bevorzugten Ausführungsform wird das erfindungsgemäße Verfahren während der gesamten Einspritzphase und/oder während der gesamten Nachdruckphase durchgeführt.

Es hat sich gezeigt, dass insbesondere auch in der gesamten Nachdruckphase das erfindungsgemäße Verfahren von besonderem Vorteil ist. Insbesondere kann der erforderliche Nachdruck durch eine Rotation der Plastifizierschnecke zumindest teilweise unterstützend erzeugt werden, da ein üblicherweise erforderlicher Nachdruck oftmals kleiner ist als ein Einspritzdruck. Diese Druckniveaus für den Nachdruck können mit dem erfindungsgemäßen Verfahren beispielsweise durch eine Kombination aus Rotation und Translation der Plastifizierschnecke zu Verfügung gestellt werden. Eine im Stand der Technik hierfür störende Rückstromsperre ist beim erfindungsgemäßen Verfahren nicht vorhanden.

Insbesondere ist das erfindungsgemäße Verfahren dafür geeignet, den Übergang der Einspritz- in die Nachdruckphase, was gleich bedeutend ist mit einem Übergang von einem hohen Einspritzdruck auf einen niedrigeren Nachdruck sanfter zu gestalten, in dem ein vorhandener Massedruck $p_s$ zum Zeitpunkt des Übergangs von der Einspritz- in die Nachdruckphase über ein kurzzeitiges Reduzieren der Rotationsbewegung der Plastifizierschnecke abgebaut wird. Durch eine gezielte Beeinflussung der Rotationsbewegung der Plastifizierschnecke lassen sich somit harte Druckübergänge von der Einspritz- auf die Nachdruckphase abmildern oder einem vorbestimmten Verlauf annähern. Es wird somit die Fließfrontgeschwindigkeit der Schmelze konstanter gehalten, was positive Eigenschaften auf die Qualität der Formteile hat und von den Verarbeitern gewünscht wird.

Gemäß einer weiteren Ausführungsform wird zur Beeinflussung, insbesondere zur Konstanthaltung des Differenzstroms $\dot{m}_\Delta$ während einer Einspritz- und/oder Nachdruckphase in ein und demselben Spritzgusszyklus die Drehzahl $n_{scr}$ der Plastifizierschnecke in Abhängigkeit von der Vorschubgeschwindigkeit $v_{inj}$ und/oder dem Massedruck $p_s$ variiert.

Durch diese Maßnahme kann innerhalb eines Spritzgusszyklus insbesondere auf Druckschwankungen im Schneckenvorraum reagiert werden.

Bevorzugt wird als Spritzgießmaschine eine elektrisch oder hydraulisch angetriebene Spritzgießmaschine oder eine hybride Maschine verwendet.

Bevorzugt wird die Drehzahl $n_{scr}$ proportional zur Vorschubgeschwindigkeit $v_{inj}$ in translatorischer Richtung und/oder proportional zum Massendruck $p_S$, insbesondere gemessen im Schneckenvorraum oder hinter dem Schneckenschaft vorgegeben.

In einer weiteren Ausführungsform kann die Drehzahl $n_{scr}$ als einstellbares Profil vorgegeben werden.

Zweckmäßigerweise wird die Einspritzung der Schmelze über die translatorische Vorschubgeschwindigkeit $v_{inj}$ der Plastifizierschnecke entlang ihres translatorischen Verfahrweges geregelt.

Bevorzugt wird während der Nachdruckphase ein Nachdruck der Schmelze zumindest teilweise über die Rotation der Plastifizierschnecke, insbesondere über eine unterstützende Rotation zusätzlich zur translatorischen, d. h. axialen Bewegung der Plastifizierschnecke, erzeugt.

Dies hat den Vorteil, dass beispielsweise eine bislang im Stand der Technik übliche Umschaltung von Geschwindigkeitssteuerung während der Einspritzphase auf die Drucksteuerung während der Nachdruckphase und dementsprechende Prozessungenauigkeiten während der Umschaltung vermieden werden können. Mit dem erfindungsgemäßen Verfahren gelingt es, den Übergang von der Einspritz- zur Nachdruckphase weich zu gestalten und im Falle des Aufbringens des Nachdrucks durch Variation der Rotation der Plastifizierschnecke den Massedruck auf den Nachdrucksollwert abzusenken.

Ebenfalls kann Zeit eingespart werden, die für die nachfolgende Plastifizierphase benötigt wird, da bereits während der Nachdruckphase eine Plastifizierung stattfindet.

Vorteilhaft kann es sein, die Drehzahl $n_{scr}$ zur Beeinflussung, insbesondere zur Erhöhung des Ausbringungsfaktors AF und somit eines Schussgewichtes bei vorgegebenen Schneckendurchmesser D zu verwenden.

In dieser Ausführungsform ist es besonders einfach, den Ausbringungsfaktor AF durch einfache Anpassung oder Beeinflussung der Drehzahl $n_{scr}$ anzupassen.

Weiterhin kann es vorteilhaft sein, die Drehzahl $n_{scr}$ der Plastifizierschnecke bauteilspezifisch zur Anpassung einer optimalen Fließfrontgeschwindigkeit der Schmelze innerhalb der Kavität zu steuern oder zu regeln.

Mit dem erfindungsgemäßen Verfahren in dieser Ausführungsform kann somit in einfacher Art und Weise lediglich durch eine Beeinflussung der Drehzahl $n_{scr}$ eine Fließfrontgeschwindigkeit der Schmelze im Werkzeug angepasst und somit optimiert werden.

In einer weiteren bevorzugten Ausführungsform des erfindungsgemäßen Verfahrens wird zumindest während eines Teils der Einspritzphase die Drehzahl $n_{scr}$ proportional zum Massedruck $p_s$ mit einem Faktor $k_2=f_p$ eingestellt, wobei gilt:

$$n_{scr}=f_p*p_s,$$

wobei der Massedruck $p_s$ gemessen wird und $k_2=f_p$ ein prozessspezifisch ermittelter Proportionalitätsfaktor ist. Diese Ausführungsform ermöglicht eine druckgesteuerte Einstellung der Drehzahl $n_{scr}$ in Abhängigkeit des Massedrucks $p_s$. Der Rückstrom $\dot{m}_{druck}$ von Schmelze zurück in die Schneckengänge ist unter anderem Abhängig vom Massedruck $p_s$, sodass mit dieser Ausführungsform des erfindungsgemäßen Verfahrens dem druckabhängigen Rückstrom $\dot{m}_{druck}$ durch druckabhängige Steuerung der Drehzahl $n_{scr}$ ein adäquater Gegenförderstrom $\dot{m}_{schlepp}$ entgegengesetzt werden kann.

In einer weiteren bevorzugten Ausführungsform des erfindungsgemäßen Verfahrens wird zumindest während eines Teils der Einspritzphase die Drehzahl $n_{scr}$ proportional zur Vorschubgeschwindigkeit $v_{inj}$ der Plastifizierschnecke unter Verwendung eines Faktors $k_1=f_v$ eingestellt, wobei gilt:

$$n_{scr}=f_v*v_{inj},$$

wobei die Vorschubgeschwindigkeit $v_{inj}$ gemessen oder aus Prozessdaten ermittelt wird und der Proportionalitätsfaktor $k_1=f_v$ ein prozessspezifisch ermittelter Proportionalitätsfaktor ist.

Es hat sich gezeigt, dass auch eine proportionale Anpassung der Drehzahl $n_{scr}$ an die Vorschubgeschwindigkeit $v_{inj}$ eine gute Möglichkeit darstellt, den Gegenförderstrom $\dot{m}_{schlepp}$ einzustellen, da sich der einstellende Rückstrom $\dot{m}_{druck}$ in Abhängigkeit der Vorschubgeschwindigkeit $v_{inj}$ ändert.

In einer weiteren Ausführungsform der Erfindung wird zumindest während eines Teils der Nachdruckphase die Drehzahl $n_{scr}$ der Plastifizierschnecke proportional zum Massedruck $p_s$ in der Nachdruckphase mit dem Faktor $k_3=f_{p\_pck}$ eingestellt, wobei gilt:

$$n_{scr}=f_{p\_pck}*p_{s\_pck},$$

wobei der Massedruck $p_{s\_pck}$ in der Nachdruckphase gemessen wird und $k_3=f_{p\_pck}$ ein prozessspezifisch ermittelter Proportionalitätsfaktor ist. Die Nachdruckphase wird hinsichtlich des Schneckenvorschubes üblicherweise druckgesteuert ausgeführt. Somit liegt während der Nachdruckphase ein bestimmter Massedruck $p_s$ oder ein bestimmtes Massedruckprofil vor. Eine Einstellung der Drehzahl $n_{scr}$ proportional zum Massedruck $p_s$, der in der Nachdruckphase vorliegt, hat sich als positiv herausgestellt.

Eine besonders bevorzugte Ausführungsform des erfindungsgemäßen Verfahrens ist dadurch gekennzeichnet, dass die Drehzahl $n_{scr}$ in der Einspritzphase, insbesondere in einer Anfangsphase der Einspritzphase nach der Gleichung $n_{scr}=f_v*v_{inj}$ bestimmt und eingestellt wird, solange ein Produkt aus dem Proportionalitätsfaktor $f_v$ und der Vorschubgeschwindigkeit $v_{inj}$ größer ist als ein Produkt aus dem Proportionalitätsfaktor $f_p$ und dem Massedruck $p_s$. Somit wird in der Anfangsphase die Drehzahl $n_{scr}$ der Plastifizierschnecke zunächst geschwindigkeitsgesteuert bestimmt und eingestellt, wobei nach Überschreiten eines bestimmten Umschaltpunktes zu einer druckgesteuerten Bestimmung und Einstellung der Drehzahl $n_{scr}$ übergegangen wird. Mit dieser Vorgehensweise können vorteilhafterweise in einer Anfangsphase vorliegende Trägheitseffekte und Ungenauigkeiten aufgrund noch relativ geringer Massedruckniveaus durch die anfänglich geschwindigkeitsgesteuerte Bestimmung und Einstellung der Drehzahl $n_{scr}$ überwunden werden.

Weiterhin ist es bevorzugt, die Proportionalitätsfaktoren $f_v$ und/oder $f_p$ und/oder $f_{p\_pck}$ prozessspezifisch in einer Lernphase zu ermitteln. Mit derart ermittelten Proportionalitätsfaktoren kann dann in einer Produktionsphase das erfindungsgemäße Verfahren durchgeführt werden, wobei es sich gezeigt hat, dass die hierbei erzielten Formfüllungsgrade und/oder Bauteilgewichte eine hohe Reproduzierbarkeit besitzen und in hohem Maße von Zyklus zu Zyklus konstant gehalten werden können.

Im Stand der Technik wird der Einspritzvorgang im Spritzgießprozess als translatorische Bewegung der Plastifizierschnecke beschrieben, wobei diese rotatorisch in Lage gehalten wird. Das erfindungsgemäße Verfahren sieht bevorzugt in der gesamten Phase der Einspritzbewegung nun gleichzeitig zur Vorwärtsbewegung, eine Rotationsbewegung der Plastifizierschnecke vor. Dies hat zur Folge, dass in der Plastifizierschnecke befindlicher Kunststoff über die Flanken gefördert wird. Mittels dieser Förderung von schmelzflüssigem Kunststoff innerhalb der Plastifizierschnecke ist es insbesondere abhängig von einer Drehzahl $n_{scr}$ möglich, zum einen Rückflüsse von Material in die Schneckengänge zu verhindern oder definiert zu verändern oder definiert aktiv zusätzliches Material in der Einspritzphase in den Schneckenvorraum zu fördern. Je nach Variation und Anpassung der Drehzahl $n_{scr}$ in der Einspritzphase, kann somit die Formfüllung beeinflusst werden.

Durch Drehen der Plastifizierschnecke während der Einspritz- und Nachdruckphase kann auf eine Rückstromsperre verzichtet werden, da durch das Aufplastifizieren von Material in den Schneckengängen ein entsprechender Gegendruck aufgebaut wird. Es wird somit ggf. verhindert, dass in den Schneckengängen Material zurückfließt und der Ausbringungsfaktor AF abnimmt. Der Ausbringungsfaktor AF berücksichtigt den Unterschied von Schmelze- zu Feststoffdichte sowie das Schließverhalten der Rückstromsperre. Das Schussgewicht errechnet sich nach der Formel:

$$\text{Ausbringungsfaktor x Hubvolumen=Schussgewicht.}$$

Es kann sogar im Gegenteil der Ausbringungsfaktor AF durch Erhöhung der Förderleistung gesteigert werden, wenn die Plastifizierschnecke im Formfüllvorgang mit entsprechender Drehzahl $n_{scr}$ rotiert wird. Zusätzlich fallen die Effekte einer unter Umständen ungleichmäßig schließenden Rückstromsperre weg. Die Prozesskonstanz wird erhöht.

Das Verfahren empfiehlt sich insbesondere bei Spritzgießprozessen, bei denen bereits keine Rückstromsperre eingesetzt wird (Duromere, PVC), ist aber auch für Prozesse geeignet, die bisher ausschließlich mit Rückstromsperre betrieben wurden. Es ist für hydraulisch angetriebene, wie auch für elektrische Spritzeinheiten geeignet. Es ist zweckmäßig, die Drehzahl $n_{scr}$ z. B. proportional zur Vorschubgeschwindigkeit $v_{inj}$ und/oder dem Massedruck $p_s$ (gemessen im Schneckenvorraum oder hinter dem Schneckenschaft) oder als einstellbares Profil vorzugeben.

Mit der Variation der Rotationsgeschwindigkeit, also der Drehzahl $n_{scr}$ der Plastifizierschnecke wird erfindungsgemäß ein weiterer Freiheitsgrad geschaffen, der es sogar erlaubt, die klassische Abgrenzung in Einspritz- und Nachdruckphase zu verlassen. Bisher findet ein Übergang von einer Regelung der Vorschubgeschwindigkeit in der Einspritzphase zu einer Druckregelung in der Nachdruckphase statt (v/p transition).

Somit kann es sein, dass am Beginn der Nachdruckphase im Stand der Technik erneut eine Unsicherheit über den Schließzustand der Rückstromsperre vorliegt.

Mit dem erfindungsgemäßen Verfahren wird dies dadurch verhindert, dass während der Nachdruckphase durch die Rotation der Plastifizierschnecke wie auch in der Einspritzphase der Differenzstrom $\dot{m}_\Delta$ vorhersagbar beeinflusst wird, insbesondere auf null geregelt wird. Somit ist stets eine definierte Bestimmung des Maschinen-/Verfahrenszustandes möglich.

Die Vorteile des erfindungsgemäßen Verfahrens mit variabler Drehzahl $n_{scr}$ während der translatorischen Schneckenbewegung in der Formfüllungsphase liegen darin, dass

- auf eine Rückstromsperre oder ein Sperrventil zwischen Schneckenspitze und - vorraum gänzlich verzichtet werden kann, und

- damit die Gestaltung eines förderwirksamen Schneckenkopfes möglich ist, so dass längere Verweilzeiten von Schmelzeanteilen oder die thermische Schädigung der Schmelze durch eine erhöhte Scherung im Bereich einer Rückstromsperre oder eines Sperrventils reduziert werden können,

- eine weitere Stellgröße im Bereich der Prozessführung zur Verfügung gestellt werden kann, bei der sich durch die Variation der Drehzahl $n_{scr}$ der Ausbringungsfaktor AF und somit das jeweilige Schussgewicht bei gleichem Schneckendurchmesser individuell erhöhen lässt. Ebenfalls ist somit die Fließfrontgeschwindigkeit der Schmelze in der Kavität variierbar.

Je nach Prozess ergeben sich geringere Prozessschwankungen durch Wegfall des Schließvorgangs der Rückstromsperre als Prozessstörung. Ebenfalls reduziert sich der Verschleiß und somit der Wartungsaufwand, da keine beweglichen Teile verwendet und ausgetauscht werden müssen. Durch einen höheren Ausbringungsfaktor AF ist der Einsatz einer kleineren Plastifiziereinheit möglich, bzw. wird die Produktion eines Formteils überhaupt erst möglich (Zylinderdurchmesserbegrenzung für Duroplast-Maschinen) oder es kann eine Plastifizierschnecke mit einem niedrigeren L/D Verhältnis genutzt werden. Durch das erfindungsgemäße Rotieren der Plastifizierschnecke zumindest während eines Teils der Formfüllphase reduziert sich die eigentliche Plastifizierzeit, da u.a. bereits in der Einspritz- und/oder der Nachdruckphase Kunststoffschmelze aufdosiert und im Einzug die Schneckengänge während der Einspritzbewegung besser mit Granulat gefüllt werden.

Außerdem ist die Messung eines korrigierten Fließindexes der Schmelze möglich, der zur präzisen Bewertung der dynamischen Scherviskosität der Kunststoffschmelze herangezogen werden kann. Da die Viskosität einen maßgeblichen Einfluss auf die Kompression der Schmelze und die Formfüllung selbst hat, besteht somit über eine adaptive Anpassung der Drehzahl $n_{scr}$ ebenfalls die Möglichkeit einer positiven Einflussnahme auf die Prozess- und Produktqualität.

Das erfindungsgemäße Verfahren ist für die Verwendung an elektro- und hydromechanischen Spritzgießmaschinen aller Baugrößen ausgelegt. Somit ist eine Verwendung in sämtlichen Neumaschinen und als Nachrüstung möglich.

Im Folgenden werden das erfindungsgemäße Verfahren und ein zur Durchführung des erfindungsgemäßen Verfahrens geeigneter Schneckenkopf anhand der Zeichnung näher erläutert. Es zeigen:

Figur 1: stark schematisiert eine Spritzgießmaschine in einem Betriebszustand kurz vor einer Einspritzphase;

Figur 2: die Spritzgießmaschine aus Figur 1 während der Einspritzphase;

Figur 3: schematisiert einen Verlauf der Drehzahl $n_{scr}$ über der Zeit t während eines Einspritzzyklus der Plastifizierschnecke gemäß dem Stand der Technik;

Figur 4: den Verlauf der Drehzahl $n_{scr}$ der Plastifizierschnecke bei einem Verfahren gemäß der Erfindung;

Figur 5: verschiedene Verläufe der Drehzahl $n_{scr}$ der Plastifizierschnecke während einer Einspritzphase;

Figur 6: einen vergrößerten Ausschnitt aus Figur 5 für einen Zeitabschnitt zwischen 2,0s und 2,5s der Zykluszeit;

Figur 7: einen Schneckenkopf in einer ersten Ausführungsform, welcher zur Durchführung des erfindungsgemäßen Verfahrens geeignet ist;

Figur 8: einen Schneckenkopf in einer zweiten Ausführungsform, welcher zur Durchführung des erfindungsgemäßen Verfahrens geeignet ist;

Figur 9: einen Schneckenkopf in einer dritten Ausführungsform, welcher zur Durchführung des erfindungsgemäßen Verfahrens geeignet ist;

Figur 10: einen Schneckenkopf in einer vierten Ausführungsform, welcher zur Durchführung des erfindungsgemäßen Verfahrens geeignet ist.

Eine Spritzgießmaschine 1, an der das erfindungsgemäße Verfahren Anwendung finden kann, weist einen Plastifizierzylinder 2 auf, in dem in bekannter Art und Weise eine Plastifizierschnecke 3 angeordnet ist. Die Plastifizierschnecke 3 ist mit einer ersten Antriebseinrichtung (nicht gezeigt) translatorisch mit einer Vorschubgeschwindigkeit $v_{inj}$ in einer Hubrichtung 4 bewegbar. Mittels einer zweiten Antriebseinrichtung (nicht gezeigt) ist die Plastifizierschnecke 3 um ihre Längsachse 5 in einer Rotationsrichtung 6 mit einer Drehzahl $n_{scr}$ aktiv antreibbar. Durch einen rotatorischen Antrieb in Rotationsrichtung 6 erfolgt eine Förderung von Kunststoffmaterial innerhalb von Schneckengängen 7 in einer Förderrichtung 8 in Richtung auf einen Schneckenvorraum 9 zu. An einem dem Schneckenvorraum 9 zugewandten Ende der Plastifizierschnecke 3 besitzt die Plastifizierschnecke 3 einen Schneckenkopf 10. Eine Rückstromsperre ist nicht vorgesehen. Endseitig weist der Plastifizierzylinder 2 eine Einspritzdüse 11 auf, die über einen Kanal 12 mit dem Schneckenvorraum 9 verbunden ist. Im Kanal 12 kann ein Ventil 13, insbesondere eine Verschlussdüse, angeordnet sein, mittels dem ein Strömungsweg durch den Kanal 12 freigegeben oder abgesperrt werden kann. Ab Beginn und während der Einspritzphase liegt Schmelze 14 unter Massedruck $p_S$ im Schneckenvorraum 9 vor. Mit Beginn der Einspritzphase wird gemäß dem erfindungsgemäßen Verfahren die Plastifizierschnecke 3 mittels der ersten Antriebseinrichtung in Hubrichtung 4 auf die Einspritzdüse 11 zubewegt, sodass ein Einspritzen von Schmelze über die Einspritzdüse 11 in eine Werkzeugkavität (nicht gezeigt) erfolgt. Durch den Massedruck $p_S$ wird Schmelze 14 während der Einspritzphase entgegen der Förderrichtung 8 zurück in die Schneckengänge 7 der Plastifizierschnecke 3 gepresst. Ein solcher Rückstrom von Schmelze 14 sei mit $\dot{m}_{druck}$ bezeichnet. Beim erfindungsgemäßen Verfahren wird zusätzlich zur translatorischen Bewegung der Plastifizierschnecke 3 in Hubrichtung 4 auf die Einspritzdüse 11 zu, die Plastifizierschnecke 3 in Rotationsrichtung 6 rotatorisch angetrieben. Hierdurch entsteht ein Gegenstrom von plastifiziertem oder geschmolzenem Kunststoffmaterial hin zum Schneckenvorraum 9. Dieser Gegenstrom ist dem Rückstrom $\dot{m}_{druck}$ entgegengesetzt gerichtet und überlagert diesen somit. Der Gegenstrom sei im Folgenden mit $\dot{m}_{schlepp}$ bezeichnet. Wesentlich ist, dass mit der Erfindung durch definierte Rotation der Plastifizierschnecke 3 in Rotationsrichtung 6 ohne Zwischenschaltung einer Rückstromsperre ein Gegenstrom $\dot{m}_{schlepp}$ von der Plastifizierschnecke 3 in den Schneckenvorraum 9 erzeugbar ist, der dem Rückstrom $\dot{m}_{druck}$ entgegen wirkt. Je nach Drehzahl $n_{scr}$ der Plastifizierschnecke 3 kann der Gegenstrom $\dot{m}_{schlepp}$ hinsichtlich seiner Größe genau beeinflusst werden. Eine Summe der zueinander entgegen gerichteten Ströme $\dot{m}_{druck}$ (Rückstrom) und $\dot{m}_{schlepp}$ (Gegenstrom) ergibt einen Differenzstrom $\dot{m}_\Delta$ an Schmelze 14 in den Schneckenvorraum 9 hinein oder aus dem Schneckenvorraum 9 heraus zurück in die Schneckengänge 7. Erfindungsgemäß wurde erkannt, dass in steuerungs- und/oder regelungstechnisch besonders einfacher Art und Weise der Gegenstrom $\dot{m}_{schlepp}$ vorherbestimmbar einstellbar ist, sodass in Summe auch der Differenzstrom $\dot{m}_\Delta$ gut beeinflussbar ist, was die Möglichkeit einer automatisierten Prozessführung eröffnet.

Mit Beginn der Einspritzphase wird mit einem Faktor $k_1=f_v$ die Drehzahl $n_{scr}$ in Abhängigkeit der Vorschubgeschwindigkeit $v_{inj}$ mit $n_{scr}=f_v*v_{inj}$ vorgesteuert, bis die Plastifizierschnecke auf die Schmelze auftrifft. Wenn die Plastifizierschnecke auf die Schmelze trifft und diese komprimiert, steigt der Massedruck $p_s$ an.

Wenn ein Produkt aus dem Massedruck $p_s$ und einem Proportionalitätsfaktor $k_2=f_p$ größer ist als ein Produkt aus der Vorschubgeschwindigkeit $v_{inj}$ und dem Faktor $k_1=f_v$ wird die Drehzahl $n_{scr}$ druckgesteuert nach der Gleichung $n_{scr}=p_s*f_p$ bestimmt und eingestellt.

In der Nachdruckphase wird die Drehzahl $n_{scr}$ druckgesteuert über $n_{scr}=k_3 \cdot p_{s\_pck}$ eingestellt, wobei $k_3=f_{p\_pck}$ ein Proportionalitätsfaktor ist.

Mit einem so beeinflussbaren Differenzstrom $\dot{m}_\Delta$ ist es gut möglich, eine Beeinflussung des Spritzgießprozesses prozesssicher und reproduzierbar vorzunehmen, was es insbesondere in besonders einfacher Art und Weise erlaubt, eine korrekte Formfüllung der Formkavität (nicht gezeigt) über eine Vielzahl von Spritzgießzyklen in engen Grenzen konstant zu halten.

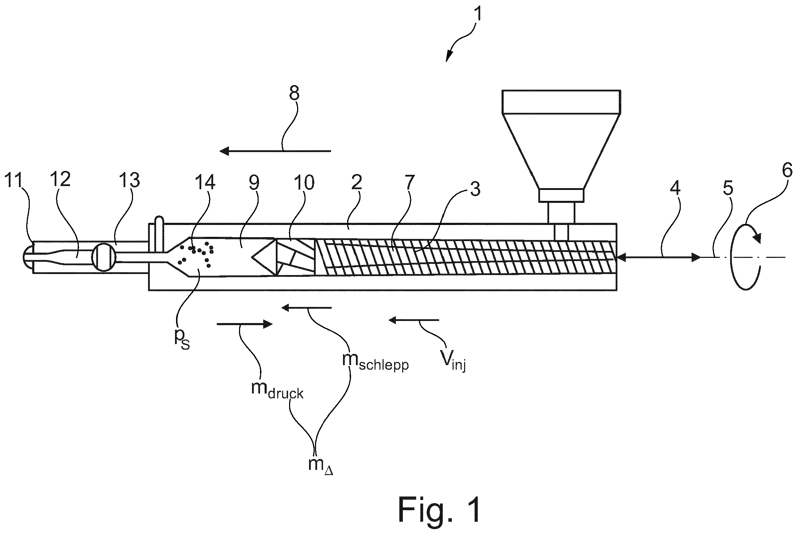

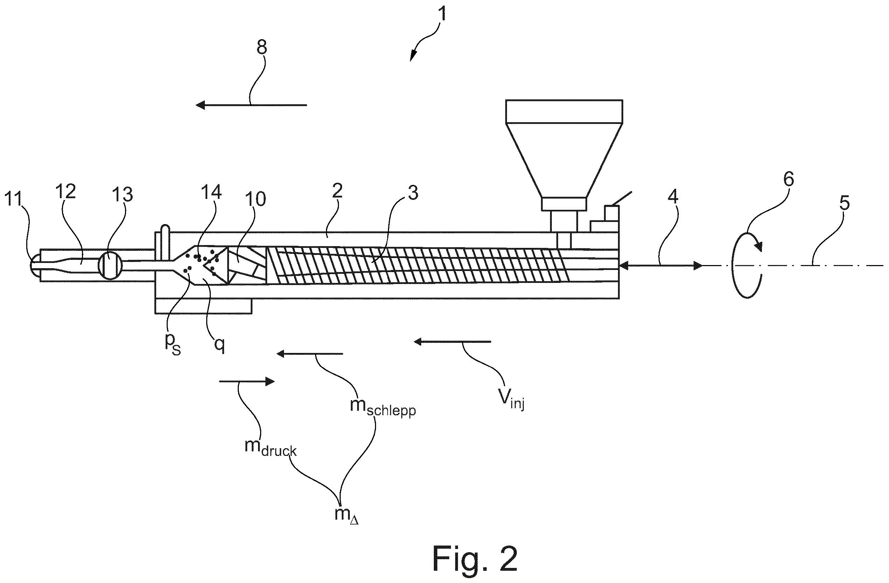

In Figur 2 befindet sich die schematisch dargestellte Spritzgießmaschine 1 gemäß Figur 1 während der Einspritzphase oder am Beginn der Nachdruckphase. Gegenüber der Darstellung in Figur 1 ist die Plastifizierschnecke 3 im Zustand gemäß Figur 2 ein Stück näher auf die Einspritzdüse 11 zubewegt angeordnet. In besonders bevorzugter Ausführungsform wird am Beginn der Nachdruckphase der für die Nachdruckphase erforderliche Massedruck $p_S$, der geringer als der für die Einspritzung der Schmelze 14 erforderliche Einspritzdruck ist, nicht nur durch eine axiale Bewegung der Plastifizierschnecke 3 in Hubrichtung 4 auf die Düse 11 zu erzeugt, sondern durch eine Kombination aus axialer Bewegung und Rotation der Plastifizierschnecke 3 in Rotationsrichtung 6. Dabei ist es erstrebenswert, die Rotation der Plastifizierschnecke 3 in Rotationsrichtung 6 so gering wie möglich zu halten, um insbesondere bei einem besonders empfindlichen Material eine mögliche Schädigung im Material zu verhindern. Es bietet sich daher an, den Nachdruck über die axiale Bewegung der Plastifizierschnecke zu ermöglichen und die Rotation der Plastifizierschnecke lediglich mit einer derartigen Intensität durchzuführen, dass ein Rückströmen der Schmelze verhindert oder verringert wird.

Der hierdurch erfolgende Gegenstrom $\dot{m}_{schlepp}$ ist dabei derart bemessen, dass der erforderliche Nachdruck in der Schmelze 14 vorhanden ist. Gleichwohl kann die Aufbringung des Nachdruckes selbstverständlich auch im Wege einer Kombination aus translatorischer Verschiebung der Plastifizierschnecke 3 auf die Düse 11 zu und durch rotatorische Bewegung der Plastifizierschnecke 3 in Rotationsrichtung 6 aufgebracht werden. Zweckmäßigerweise ist zum Aufbau eines Nachdruckes zumindest teilweise aus der Rotationsbewegung der Plastifizierschnecke 3 in Rotationsrichtung 6 der Gegenstrom $\dot{m}_{schlepp}$ derart über die Drehzahl $n_{scr}$ eingestellt, dass dieser größer ist als ein Rückstrom $\dot{m}_{druck}$, der aufgrund des Massedrucks $p_S$ zurück in die Schneckengänge 7 erfolgen würde, sodass ein Differenzstrom $\dot{m}_\Delta$ von den Schneckengängen 7 in den Schneckenvorraum 9 stattfindet. In einem solchen Betriebszustand ist ein Differenzstrom $\dot{m}_\Delta$ größer als null.

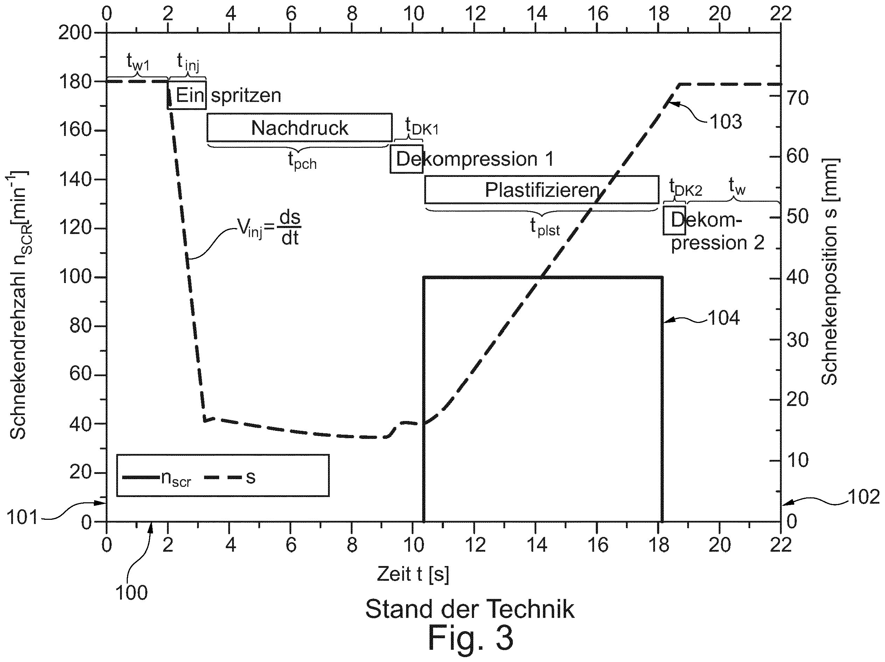

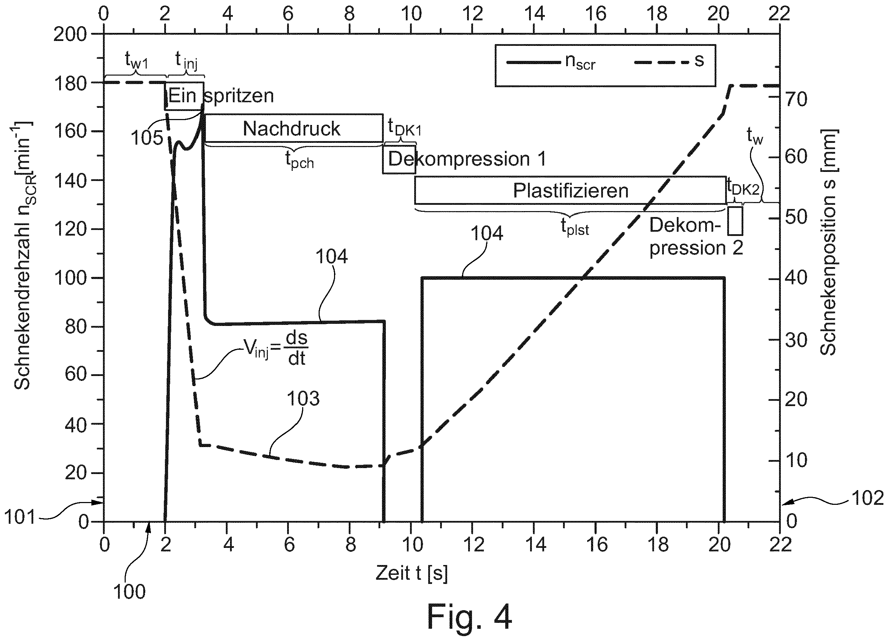

Im Folgenden wird anhand der Figuren 3 bis 6 das erfindungsgemäße Verfahren anhand von Prozessdiagrammen beispielhaft näher erläutert. Figur 3 zeigt einen Prozessablauf nach dem Stand der Technik unter Verwendung einer Rückstromsperre. Die Figuren 4 bis 6 zeigen Prozessabläufe nach dem erfindungsgemäßen Verfahren ohne Verwendung einer Rückstromsperre.

In Figur 3 ist auf der Abszisse 100 (x-Achse) die Zeit t in Sekunden aufgetragen. Auf einer ersten Ordinate 101 (y-Achse) ist die Drehzahl $n_{scr}$ in Umdrehungen pro Minute ($min^{-1}$) aufgetragen. Auf einer zweiten Ordinate 102 ist die Schneckenposition s in Millimetern aufgetragen.

Die Schneckenposition s ist über der Zeit t als gestrichelte Linie 103 dargestellt. Die Drehzahl $n_{scr}$ ist als durchgezogene Linie 104 dargestellt. Zum Zeitpunkt t=0s ist die Drehzahl $n_{scr}$ wie auch die translatorische Vorschubgeschwindigkeit $v_{inj}$ der Plastifizierschnecke 3 Null. Zum Zeitpunkt t=2s beginnt die Einspritzphase, welche bis zum Zeitpunkt t=3,2s andauert. Die Dauer der Einspritzphase ist allgemein mit $t_{inj}$ bezeichnet. Während der Einspritzphase ist die Drehzahl $n_{scr}$ Null. Die Plastifizierschnecke 3 wird mit der Vorschubgeschwindigkeit $v_{inj}$ aus ihrer Startposition bei s=72mm bis in ihre Endposition bei etwa s=15mm bewegt. Die translatorische Vorschubgeschwindigkeit $v_{inj}$ entspricht dabei der Steigung der gestrichelten Linie 103 im Zeitfenster zwischen t=2s und t=3,2s.

Während der Nachdruckphase (t=2s bis t=9,2s) fällt die Schneckenposition s nur geringfügig ab. Die Drehzahl $n_{scr}$ ist während der Nachdruckphase Null. Die Dauer der Nachdruckphase ist allgemein mit $t_{pck}$ bezeichnet.

Im Anschluss an die Nachdruckphase bei etwa t=9,2s findet eine erste Dekompressionsphase statt, in der die Schneckenposition s erneut leicht zunimmt. Während der ersten Dekompressionsphase, die im Prozess gemäß Figur 3 in der Zeit zwischen etwa t=9,2s und t=10,2s stattfindet, ist die Drehzahl $n_{scr}$ Null. Die Dauer der ersten Dekompressionsphase ist allgemein mit $t_{DK1}$ bezeichnet.

Im Anschluss an die erste Dekompressionsphase beginnt bei etwa t=10,2s die Plastifizierphase, welche bis ungefähr t=18,1s andauert. Während der Plastifizierphase, deren Dauer allgemein mit $t_{plst}$ angegeben ist, wird Schmelze 14 aufbereitet. Zur Aufbereitung der Schmelze 14 wird die Plastifizierschnecke 3 während der Plastifizierphase mit einer Drehzahl $n_{scr}$=100 $min^{-1}$ rotatorisch angetrieben. Hierdurch wird Rohmaterial plastifiziert und durch die Rotation der Plastifizierschnecke 3 in den Schneckenvorraum 9 gefördert. Gleichzeitig wird die Plastifizierschnecke 3 während der Plastifizierphase bis in eine Position bei etwa s=68mm zurück versetzt. Im Anschluss an die Plastifizierphase folgt eine zweite Dekompressionsphase, in der die Plastifizierschnecke 3 in ihre Ausgangsposition (s=72mm) zurückgeführt wird. Die Plastifizierschnecke 3 wird somit in der Plastifizierphase in einen Plastifizierhub und in der zweiten Dekompressionsphase in einen Dekompressionshub zurückversetzt. Während der zweiten Dekompressionsphase ist die Drehzahl $n_{scr}$ Null. Die Dauer der zweiten Dekompressionsphase ist allgemein mit $t_{DK2}$ bezeichnet.

Während der Plastifizierphase liegt die Schmelze 14 im Schneckenvorraum 9 unter einem Staudruck $p_s=p_{stau}$ vor. Zum Abbau des Staudruckes $p_{stau}$ am Ende der Plastifizierphase ist eine zweite Dekompressionsphase vorgesehen, während der der Staudruck $p_{stau}$ unter Erhöhung der Schneckenposition s zumindest teilweise abgebaut wird.

Nach Abschluss der zweiten Dekompressionsphase bei etwa t=18,8s befindet sich die Spritzgießmaschine 1 wieder in Ausgangsposition. Nach einer Wartezeit $t_w$, die im Prozess gemäß Figur 3 etwas mehr als 3 Sekunden beträgt (18,8s≤t≤22s), kann der Prozess erneut von vorne beginnen.

Bei einem solchen klassischen Prozessverlauf gemäß dem Stand der Technik ist die Plastifizierschnecke 3 somit lediglich während der Plastifizierphase rotatorisch mit einer Drehzahl $n_{scr}>0$ angetrieben. In den übrigen Prozessphasen steht die Plastifizierschnecke 3 in Rotationsrichtung 6 still.

Ein solcher Prozessverlauf gemäß dem Stand der Technik findet unter Benutzung einer Rückstromsperre statt, die beispielsweise als sogenannte Drei-Flügel-Rückstromsperre ausgebildet sein kann.

Figur 4 zeigt beispielhaft einen Prozessablauf gemäß dem erfindungsgemäßen Verfahren. Auf der Abszisse 100 ist die Zykluszeit t in Sekunden aufgetragen. Auf der ersten Ordinate 101 ist die Drehzahl $n_{scr}$ in Umdrehungen pro Minute ($min^{-1}$) aufgetragen. Auf der zweiten Ordinate 102 ist die Schneckenposition s in Millimetern aufgetragen. Die gestrichelte Linie 103 zeigt den Verlauf der Schneckenposition s über der Zykluszeit t. Die durchgezogene Linie 104 zeigt beispielhaft den Verlauf der Drehzahl $n_{scr}$ in Abhängigkeit von der Zykluszeit t nach dem erfindungsgemäßen Verfahren.

In einer ersten Wartezeit $t_{w1}$ von t=0s bis etwa t=2s befindet sich die Plastifizierschnecke 3 in ihrer Ausgangsposition (s=72mm). Die Drehzahl $n_{scr}$ ist dabei Null. Während der Einspritzphase, das heißt während der Zeit 2s≤t≤3,2s wird die Plastifizierschnecke 3 zum Einspritzen der Schmelze 14 in die Kavität aus ihrer Ausgangsposition bei s=72mm in eine Endposition bei s≈11 mm translatorisch verschoben. Aus der Steigung der gestrichelten Linie 103 im Zeitfenster zwischen t=2,0s und t=3,2s ergibt sich die translatorische Vorschubgeschwindigkeit $v_{inj}$ der Plastifizierschnecke 3 zu etwa $v_{inj}$=50mm/s.

Während der Einspritzphase erfolgt die translatorische Bewegung der Plastifizierschnecke 3 üblicherweise positionsgeregelt oder
geschwindigkeitsgeregelt. Dies bedeutet, dass die Spritzgießmaschine 1 derart eingerichtet ist, dass die Plastifizierschnecke 3 während der Einspritzphase mit einer Geschwindigkeitsregelung oder einer Positionsregelung in translatorischer Richtung vorgegebene Schneckenpositionen s zu vorgegebenen Prozesszeitpunkten t anfährt. Aus diesem Bewegungsablauf der Plastifizierschnecke 3 ergibt sich ein Druckverlauf $p_s$ der Schmelze 14 im Schneckenvorraum 9 während der Einspritzphase. Die Steuerung der Drehzahl $n_{scr}$ erfolgt dabei bevorzugt proportional zum Massedruck $p_s$ mit einem Proportionalitätsfaktor $k_2=f_p$, wobei gilt

$$n_{scr}=f_p*p_s.$$

Der Massedruck $p_s$ wird dabei gemessen. Der Massedruck $p_s$ kann beispielsweise im Schneckenvorraum 9 oder an einer anderen geeigneten Stelle, zum Beispiel im Inneren der Formkavität, gemessen werden.

Geeignete Werte für den Proportionalitätsfaktor $k_2=f_p$ können beispielsweise dadurch ermittelt werden, dass Versuche durchgeführt werden, bei denen ermittelt wird, mit welchem Wert für den Proportionalitätsfaktor $k_2=f_p$ befriedigende Formfüllungen, insbesondere befriedigende Bauteilgewichte, erreicht werden. Als Referenz für ein befriedigendes Bauteilgewicht bzw. für befriedigende Formfüllungen kann ein Lernprozess verwendet werden, der eine Rückstromsperre, beispielsweise in der Bauart einer Drei-Flügel-Rückstromsperre nutzt. Bauteilgewichte oder Formfüllgrade, die unter Verwendung einer Rückstromsperre erzielt werden können, sollen durch geeignete Wahl des Proportionalitätsfaktors $k_2=f_p$ möglichst genau erreicht werden. Es empfiehlt sich somit, in der Lernphase einen Vorversuch zum Erhalt eines Gutteils unter Verwendung einer Rückstromsperre und einen Feldversuch ohne die Verwendung einer Rückstromsperre zur möglichst guten Anpassung des Proportionalitätsfaktors $k_2=f_p$ durchzuführen.

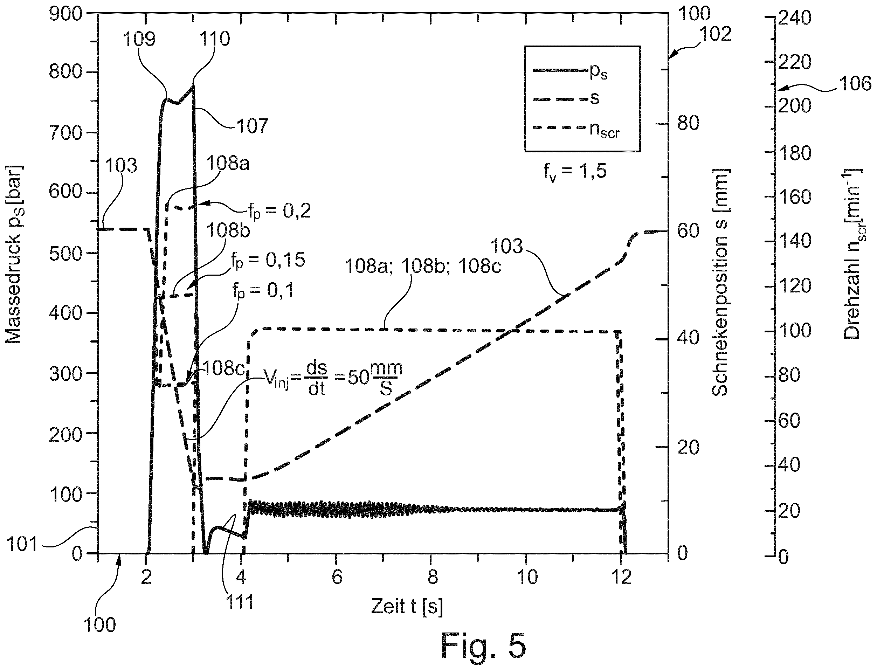

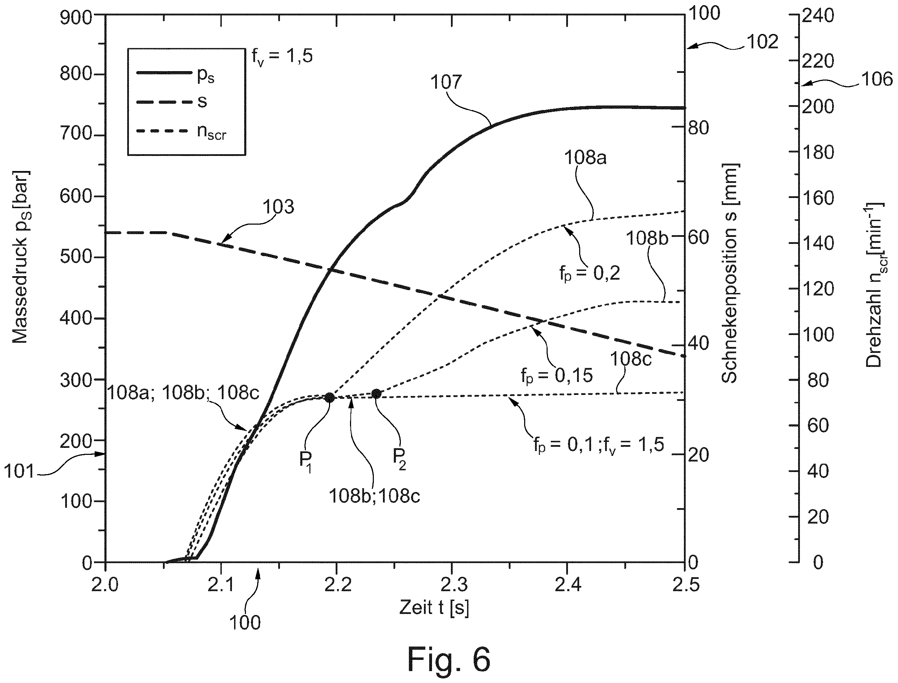

Eine Drucksteuerung der Drehzahl $n_{scr}$ während der Einspritzphase proportional zum Massedruck $p_s$ hat sich bewährt. Eine solche Drucksteuerung der Drehzahl $n_{scr}$ über die gesamte Dauer der Einspritzphase bis zu einem Umschaltpunkt 105 kann zu Beginn der Einspritzphase, in der der Massedruck $p_s$ noch relativ niedrige Werte aufweist, insbesondere in einem Bereich von wenigen zehntel Sekunden nach Beginn des Einspritzens zu einem verzögerten Drehzahlaufbau der Drehzahl $n_{scr}$ führen, da der zu messende Massedruck $p_s$ noch relativ gering ist. In einer solchen Startphase der Einspritzphase kann es gegebenenfalls zweckmäßig sein, die Drehzahl $n_{scr}$ in Abhängigkeit der translatorischen Vorschubgeschwindigkeit $v_{inj}$ der Plastifizierschnecke 3 vorzusteuern. Eine derartige Vorsteuerung in Abhängigkeit der translatorischen Vorschubgeschwindigkeit $v_{inj}$ kann die Bauteilgenauigkeit verbessern, da bereits zu Beginn der Einspritzphase, in der zwar die Plastifizierschnecke 3 bereits translatorisch bewegt wird, aber noch kein signifikanter Druckaufbau stattgefunden hat, bereits eine rotatorische Bewegung der Plastifizierschnecke 3 mit einer Drehzahl $n_{scr}$ stattfindet und somit bereits ein gewisser Gegenförderstrom $\dot{m}_{schlepp}$ erzeugt werden kann, bevor ein signifikanter Druckanstieg im Schneckenvorraum 9 stattfindet. Dies wird weiter unten, insbesondere im Zusammenhang mit Figuren 5 und 6 noch detaillierter erläutert werden.

Nach dem Erreichen des Umschaltpunktes 105 beginnt die Nachdruckphase, während der der Massedruck $p_s$

druckgesteuert auf einem Nachdruckniveau $p_{s\_pck}$ gehalten wird. Während der Nachdruckphase, die im Beispiel gemäß Figur 4 etwa bei t=3,2s beginnt und bei etwa t=9,2s endet, wird die Drehzahl $n_{scr}$ proportional zum Nachdruck $p_{s\_pck}$ mit einem Proportionalitätsfaktor $k_3=f_{p\_pck}$ in Abhängigkeit vom Nachdruck $p_{s\_pck}$ gesteuert. Im vorliegenden Ausführungsbeispiel gemäß Figur 4 liegt die Drehzahl $n_{scr}$ während der Nachdruckphase etwa bei 80 Umdrehungen pro Minute (min⁻¹).

Im weiteren Verlauf wird die Drehzahl $n_{scr}$ während der ersten Dekompressionsphase, die im Ausführungsbeispiel gemäß Figur 4 in der Zeit zwischen etwa t=9,2s und t=10,2s stattfindet, auf Null gesetzt. In der ersten Dekompressionsphase steht die Plastifizierschnecke 3 somit rotatorisch still. Während der sich an die erste Dekompressionsphase anschließenden Plastifizierphase und der sich an die Plastifizierphase anschließenden zweiten Dekompressionsphase wird die Drehzahl $n_{scr}$ analog zum Stand der Technik in üblicher Art und Weise gesteuert.

Im Beispiel gemäß Figur 4 wird während der Plastifizierphase (10,2s<t<20,5s) die Drehzahl $n_{scr}$ zum Plastifizieren der Schmelze 14 auf etwa 100 Umdrehungen pro Minute eingestellt. Im Anschluss an die Plastifizierphase (t>20,5s), also während der zweiten Dekompressionsphase und der sich daran gegebenenfalls anschließenden Wartezeiten $t_w$ am Zyklusende und/oder $t_{w1}$ am Beginn des darauffolgenden Zuklus ist die Drehzahl $n_{scr}$ Null. Die Plastifizierschnecke 3 befindet sich nach der zweiten Dekompressionsphase bis zum Beginn der Einspritzphase des darauf folgenden Zyklus wieder in der Ausgangsstellung bei s=72mm. Die Wartezeiten $t_w$, $t_{w1}$ ergeben sich gegebenenfalls durch andere Vorgänge, die während eines Zykluses an einer Spritzgießmaschine 1 ablaufen. Derartige Vorgänge können beispielsweise Verfahrzeiten für Werkzeughälften und/oder Schließzeiten für Formwerkzeuge sein.

Figur 5 zeigt beispielhaft verschiedene Verläufe der Drehzahl $n_{scr}$ während eines Spritzgießzyklus gemäß dem erfindungsgemäßen Verfahren, wobei auf der Abszisse 100 die Zykluszeit t in Sekunden aufgetragen ist. Auf der ersten Ordinate 101 ist der Massedruck $p_s$ in bar aufgetragen. Auf der zweiten Ordinate 102 ist die Schneckenposition s in Millimetern aufgetragen. Auf einer dritten Ordinate 106 ist die Drehzahl $n_{scr}$ in Umdrehungen pro Minute (min⁻¹) aufgetragen.

Der Massedruck $p_s$ ist in einer durchgezogenen Linie 107 dargestellt. Der Verlauf der Schneckenposition s ist in Form der gestrichelten Linie 103 dargestellt.

Beispielhaft sind drei mögliche Drehzahlverläufe der Drehzahl $n_{scr}$ in Form von punktierten Linien 108a, 108b und 108c dargestellt. Die punktierte Linie 108a repräsentiert dabei einen Drehzahlverlauf der Drehzahl $n_{scr}$ für einen Proportionalitätsfaktor $f_p$=0,2. Die punktierte Linie 108b repräsentiert einen Drehzahlverlauf der Drehzahl $n_{scr}$ für einen Proportionalitätsfaktor $f_p$=0,15. Die punktierte Linie 108c repräsentiert einen Drehzahlverlauf der Drehzahl $n_{scr}$ für einen Proportionalitätsfaktor $f_p$=0,1. Der dargestellte Spritzgießzyklus entspricht einem Spritzgießzyklus ohne Nachdruckphase. Nach der Wartezeit $t_{w1}$ von etwa 2s, das heißt bei etwa t=2s, beginnt die translatorische Bewegung der Plastifizierschnecke 3 aus ihrer Ausgangsposition bei etwa s=60mm in Richtung kleiner werdender Schneckenpositionen s. Bei etwa t=3,1 s hat die Schneckenposition s eine Endposition bei etwa s=11mm erreicht. Zu diesem Zeitpunkt ist die Einspritzphase abgeschlossen. Es schließt sich ein Dekompressionsvorgang an. Nach dem Dekompressionsvorgang verbleibt die Plastifizierschnecke 3 für eine gewisse Zeit bis zum Start der Plastifizierphase auf einem Plateau von etwa s=13mm. Bei etwa t=4,1s beginnt die Plastifizierphase, sodass ab diesem Zeitpunkt die Schneckenposition s erneut ansteigt. Am Ende der Plastifizierphase, das heißt bei t≈12s hat die Schneckenposition s einen Wert von etwa s=55mm erreicht. Hiernach schließt sich die zweite Dekompressionsphase an, während der die Schneckenposition s wiederum ihre Ausgangsposition bei s=60mm erreicht.

Der Massedruck $p_s$ (durchgezogene Linie 107) steigt mit Beginn der Einspritzphase bei etwa t=2s sehr steil auf ein erstes Maximum 109 an, um anschließend etwas abzufallen und bei etwa t=3s ein zweites Maximum 110 zu erreichen. Das zweite Maximum 110 entspricht dabei dem Ende der translatorischen Vorwärtsbewegung der Plastifizierschnecke 3. Zu diesem Zeitpunkt wird die Vorwärtsbewegung der Plastifizierschnecke 3 gestoppt und in die erste Dekompressionsphase übergegangen, was einen steilen Druckabfall des Massedruckes $p_s$ zur Folge hat. Im Anschluss daran erfolgt erneut ein leichter Druckanstieg bis zu einem dritten Maximum 111. Dieser Druckanstieg ist auf mechanische Schwingungsvorgänge beim schlagartigen Entlasten der Plastifizierschnecke 3 zurückzuführen. Bei etwa t=4,1s beginnt die Plastifizierphase, wobei der Massedruck $p_s$ nach einem Einschwingvorgang während der Zeit von t>4s bis etwa t=8,5s einen relativ konstanten Druckwert erreicht, der dem Staudruck $p_{stau}$ der Schmelze 14 während der Plastifizierphase entspricht. Am Ende der Plastifizierphase, etwa bei t=12s fällt Massedruck $p_s$ vom Niveau des Staudruckes $p_{stau}$ auf etwa Umgebungsdruck ab.

Während der Plastifizierphase, beträgt die Drehzahl $n_{scr}$ etwa 100 Umdrehungen pro Minute, was der Plastifizierdrehzahl $n_{scr\_plst}$ entspricht.

Während der Einspritzphase, das heißt im Ausführungsbeispiel gemäß Figur 5 in der Zeit von etwa t=2,0s bis t=3,1s, wird die Plastifizierschnecke 3 mit einer Drehzahl $n_{scr}$ angetrieben, was anhand dreier Beispiele, nämlich anhand der punktierten Linien 108a, 108b und 108c verdeutlicht ist. Die punktierte Linie 108a zeigt den Drehzahlverlauf der Plastifizierschnecke 3 während der Einspritzphase, wobei deren Drehzahl $n_{scr}=f_p*p_s$ mit einem Proportionalitätsfaktor $f_P=k_2$=0,2 in Abhängigkeit des Massedruckes $p_s$ angesteuert wird. Die punktierte Linie 108b zeigt den entsprechenden Drehzahlverlauf der Plastifizierschnecke 3 während der Einspritzphase für einen Proportionalitätsfaktor $k_2=f_P$=0,15. Die punktierte Linie 108c zeigt den entsprechenden Drehzahlverlauf der Drehzahl $n_{scr}$, basierend auf einem Proportionalitätsfaktor $k_2=f_P=0,1$. Der Massedruck $p_S$ wird gemessen. Hieraus wird nach der Gleichung $n_{scr}=f_P*p_s$ die Drehzahl $n_{scr}$ berechnet, die der Plastifizierschnecke 3 über einen Plastifizierantrieb aufgegeben werden kann. Der zu einem Zeitpunkt t tatsächlich erreichte Drehzahlwert für die Drehzahl $n_{scr}$ kann aufgrund von Trägheits- und/oder Reibungseffekten sowie aufgrund einer gegebenenfalls zwischengeschalteten Dämpfung oder eines Filters, z. B. eines Signalfilters etwas niedriger als der Sollwert liegen oder zeitverzögert eintreten.

Bei dem in Figur 5 beispielhaft dargestellten Ausführungsbeispiel des erfindungsgemäßen Verfahrens wird zumindest während eines überwiegenden Teils der Einspritzphase, die Drehzahl $n_{scr}$ in Abhängigkeit vom Massedruck $p_S$ druckgesteuert eingestellt. Hierdurch gelingt es, in Abhängigkeit vom Massedruck $p_s$ den Rückstrom $\dot{m}_{druck}$ durch einen Gegenförderstrom $\dot{m}_{schlepp}$ zu überlagern und somit den Differenzstrom $\dot{m}_\Delta$ während der Einspritzphase zu beeinflussen.

Zu Zeiten, bei denen noch relativ niedrige Druckwerte des Massedruckes $p_s$ vorliegen und zudem Trägheitseffekte beim Anfahren der Plastifizierschnecke 3 in Rotationsrichtung 6 noch einen hohen Einfluss haben, kann es zweckmäßig sein, der oben erläuterten druckabhängigen Steuerung der Drehzahl $n_{scr}$ eine geschwindigkeitsabhängige Drehzahlsteuerung vorzulagern. Eine derartige geschwindigkeitsabhängige Drehzahlsteuerung erfolgt beispielsweise nach der Gleichung

$$n_{scr}=f_v*v_{inj}.$$

Dabei ist $n_{scr}$ eine einzustellende Drehzahl der Plastifizierschnecke 3. Der Faktor $k_1=f_v$ ist ein prozessspezifischer Proportionalitätsfaktor. Die Vorschubgeschwindigkeit $v_{inj}$ ist die zeitliche Ableitung der Schneckenposition s nach der Zeit dt und stellt die translatorische Vorschubgeschwindigkeit $v_{inj}$ der Plastifizierschnecke 3 während der Einspritzphase dar.

Im Ausführungsbeispiel gemäß Figur 5 ist beispielhaft der Proportionalitätsfaktor $k_1=f_v=1,5$ gewählt. Die translatorische Vorschubgeschwindigkeit $v_{inj}$ beträgt im Ausführungsbeispiel gemäß Figur 5 50mm/s. Die translatorische Vorschubgeschwindigkeit $v_{inj}$ ist nach dem Start der Einspritzphase bei üblichen Spritzgießmaschinen in sehr kurzer Zeit, meistens noch bevor ein signifikanter Druckanstieg des Schmelzdruckes $p_s$ stattfindet, voll ausgeprägt. Es hat sich als zweckmäßig erwiesen, die Drehzahl $n_{scr}$ nach der Gleichung

$$n_{scr}=f_v*v_{inj}$$

so lange anzusteuern, bis ein druckabhängig ermittelter Wert für die Drehzahl $n_{scr}$ nach der Gleichung $n_{scr}=f_p*p_s$ größer ist als der geschwindigkeitsabhängig ermittelte Wert für $n_{scr}=f_v*v_{inj}$.

In anderen Worten bedeutet dies:

1. Sofern gilt, dass das Produkt aus dem Proportionalitätsfaktor $k_1=f_v$ und der Vorschubgeschwindigkeit $v_{inj}$ der Plastifizierschnecke 3 größer ist als das Produkt aus dem zweiten Proportionalitätsfaktor $k_2=f_p$ und dem gemessenen Massedruck $p_s$ wird die Drehzahl $n_{scr}$ nach der Gleichung $n_{scr}=f_v*v_{inj}$ bestimmt und eingestellt. Sobald das Produkt aus dem zweiten Proportionalitätsfaktor $k_2=f_p$ und dem gemessenen Massedruck $p_s$ größer ist als das Produkt aus dem ersten Proportionalitätsfaktor $k_1=f_v$ und der translatorischen Vorschubgeschwindigkeit $v_{inj}$, wird die Drehzahl $n_{scr}$ der Plastifizierschnecke 3 nach der Gleichung

$$n_{scr}=f_p*p_s$$

bestimmt und eingestellt.

2. Es erfolgt somit zunächst, d. h. für relativ geringe Druckwerte des Massedruckes $p_s$ eine geschwindigkeitsabhängige Steuerung der Drehzahl $n_{scr}$ in Abhängigkeit der translatorischen Vorschubgeschwindigkeit $v_{inj}$ der Plastifizierschnecke 3. Für höhere Druckwerte des Massedruckes $p_s$ erfolgt eine Steuerung der Drehzahl $n_{scr}$ druckabhängig in Abhängigkeit des Massedruckes $p_s$.

3. Für den Fall, dass zu keinem Zeitpunkt des Spritzgießzyklusses der Term $f_p*p_s$ größer ist als der Term $f_v*v_{inj}$, erfolgt keine Umschaltung von der geschwindigkeitsgesteuerten Drehzahl $n_{scr}$ auf die druckgesteuerte Drehzahl $n_{scr}$ der Plastifizierschnecke Die Drehzahl $n_{scr}$ wird in diesem Fall ausschließlich geschwindigkeitsgesteuert in Abhängigkeit der translatorischen Vorschubgeschwindigkeit $v_{inj}$ bestimmt und eingestellt.

Wird die Drehzahl $n_{scr}$ der Plastifizierschnecke 3 während der Einspritzphase und/oder während der Nachdruckphase nach der Gleichung

$$n_{scr}=f_p * p_s$$

bestimmt und eingestellt, sind hierbei

$n_{scr}$: die Drehzahl der Plastifizierschnecke 3 in Umdrehungen pro Minute (min$^{-1}$)
$f_p$: Proportionalitätsfaktor mit der Einheit min$^{-1}$/bar
$p_s$: Massedruck in bar.

Der Massedruck $p_s$ wird beispielsweise im Schneckenvorraum 9 oder an einer anderen Stelle der Spritzgießmaschine 1, an der ein den Massedruck $p_s$ repräsentierender Druck gemessen werden kann, gemessen. Ein geeigneter Wert für den Proportionalitätsfaktor $k_2=f_p$ wird prozessspezifisch im Wege eines Vorversuches ermittelt. Hierzu wird zunächst in einer Lernphase unter Zuhilfenahme einer Rückstromsperre mindestens ein Gutteil erzeugt. Dieses Gutteil dient insbesondere hinsichtlich seines Teilegewichtes als Referenzbauteil. Nach Erhalt des Referenzbauteiles wird die Rückstromsperre aus der Plastifiziereinheit ausgebaut. Der Spritzgießzyklus wird ohne Verwendung einer Rückstromsperre für verschiedene Werte für $f_p$ wiederholt. Für jeden Wert $f_p$ wird mindestens ein Vergleichsbauteil erzeugt, wobei das Vergleichsbauteil hinsichtlich seines Bauteilgewichtes mit dem mindestens einen Referenzbauteil verglichen wird. Mit dieser Vorgehensweise kann iterativ ein Wert für den Proportionalitätsfaktor $f_p$ ermittelt werden, bei dem sichergestellt ist, dass das Versuchsbauteil innerhalb eines tolerierbaren Toleranzbereiches dem Gutteil entspricht. Ist ein geeigneter Wert für den Faktor $f_p$ gefunden, kann das erfindungsgemäße Verfahren in einer Produktionsphase mit dem so ermittelten Wert für $f_p$ ohne Verwendung einer Rückstromsperre durchgeführt werden.
Wird die Drehzahl $n_{scr}$ in Abhängigkeit der translatorischen Vorschubgeschwindigkeit $v_{inj}$ der Plastifizierschnecke 3 mit

$$n_{scr}=f_v * v_{inj}.$$

ermittelt und eingestellt, sind hierbei:

$n_{scr}$: die Drehzahl der Plastifizierschnecke 3 in Umdrehungen/min (min$^{-1}$)
$f_v$: Proportionalitätsfaktor mit der Einheit $\dfrac{min^{-1}}{mm/s}$
$v_{inj}$: translatorische Vorschubgeschwindigkeit der Plastifizierschnecke 3 in mm/s.

Zur Ermittlung der Größe des Proportionalitätsfaktors $f_v$ wird im Wesentlichen analog zur Bestimmung der Größe des Proportionalitätsfaktors $f_p$ vorgegangen. Hierzu wird zunächst im Rahmen einer Lernphase in einem Vorversuch unter Verwendung einer Rückstromsperre mindestens ein Gutteil, bevorzugt mehrere Gutteile, erzeugt. Im Anschluss an die Erzeugung der Gutteile wird die Rückstromsperre ausgebaut. Anschließend werden ohne Verwendung einer Rückstromsperre unter Verwendung unterschiedlicher Faktoren $f_v$ eine Mehrzahl von Versuchsteilen erzeugt, die jeweils mit den Gutteilen verglichen werden, insbesondere hinsichtlich ihre Bauteilgewichtes. Liegt ein Versuchsbauteil innerhalb eines tolerierbaren Toleranzfeldes, z. B. hinsichtlich des Bauteilgewichts im Vergleich zum Gutteil, so wird der mit dem entsprechenden Versuchsbauteil verwendete Proportionalitätsfaktor $k_1=f_v$ verwendet. Es erfolgt somit eine iterative Bestimmung des Proportionalitätsfaktors $f_v$ in einer der Produktionsphase vorgeschalteten Lernphase. Mit einem in der Lernphase ermittelten geeigneten Wert für den Proportionalitätsfaktor $k_1=f_v$ kann dann im Anschluss an die Lernphase ohne Verwendung einer Rückstromsperre das entsprechende Bauteil produziert werden, wobei zumindest während eines Teils der Einspritzphase die Drehzahl $n_{scr}$ aus der translatorischen Vorschubgeschwindigkeit $v_{inj}$ und dem ermittelten Wert für den Proportionalitätsfaktor $k_1=f_v$ ermittelt und eingestellt wird. In diesem Fall erfolgt somit die Drehzahlsteuerung der Drehzahl $n_{scr}$ zumindest während der Einspritzphase geschwindigkeitsgesteuert in Abhängigkeit von der translatorischen Vorschubgeschwindigkeit $v_{inj}$ der Plastifizierschnecke 3.
Als besonders vorteilhaft hat sich erwiesen, zumindest während der Einspritzphase die Drehzahl $n_{scr}$ in einer Anfangsphase der Einspritzphase geschwindigkeitsgesteuert durchzuführen und in einer sich an die Anfangsphase der Einspritzphase anschließenden restlichen Einspritzphase druckgesteuert einzustellen. Dies hat den Vorteil, dass zu einer Zeit, in der noch kein nennenswerter Massedruck $p_s$ vorliegt, bereits aber ein Vorschub der Plastifizierschnecke 3 stattfindet und somit die Vorschubgeschwindigkeit $v_{inj}>0$mm/s ist, bereits eine Anpassung der Drehzahl $n_{scr}$ der Plastifizierschnecke 3 in der Anfangsphase stattfinden kann. Zweckmäßigerweise wird bei dieser Vorgehensweise wie folgt vorgegangen:

1. Der Massedruck $p_s$ wird während der gesamten Einspritzphase gemessen.

2. Die Vorschubgeschwindigkeit $v_{inj}$ der Plastifizierschnecke 3 in translatorischer Richtung wird entweder gemessen oder aus den momentanen Maschinendaten, wie z. B. einer Änderung der Schneckenposition $\Delta s$ pro Zeiteinheit $\Delta t$ berechnet.

3. Solange das Produkt aus dem Proportionalitätsfaktor $f_v$ und der Vorschubgeschwindigkeit $v_{inj}$ größer ist als das Produkt aus dem Proportionalitätsfaktor $f_p$ und dem Massedruck $p_s$ wird die Drehzahl $n_{scr}$ nach der Gleichung

$$n_{scr}=f_v{}^*v_{inj}$$

ermittelt und eingestellt. Ab einem Zeitpunkt $t_1$, ab dem gilt

$$f_p{}^*p_s>f_v{}^*v_{inj}$$

wird die Drehzahl $n_{scr}$ nach der Gleichung

$$n_{scr}=f_p{}^*p_s$$

ermittelt und eingestellt. Über die gesamte Einspritzphase gesehen findet somit zunächst eine geschwindigkeitsabhängige Steuerung der Drehzahl $n_{scr}$ und ab einem gewissen Zeitpunkt $t_1$ eine druckabhängige Steuerung der Drehzahl $n_{scr}$ statt.

Versuche haben gezeigt, dass mit einer derart kombinierten geschwindigkeitsgesteuerten wie auch druckgesteuerten Einstellung der Drehzahl $n_{scr}$ besonders gute Ergebnisse erzielbar sind. Dies wird darauf zurückgeführt, dass in einer Anfangsphase der Einspritzphase, in der noch kein nennenswerter Massedruck $p_s$ vorhanden ist, aber bereits die Vorschubgeschwindigkeit $v_{inj}$ existiert, somit frühzeitig mit der Beaufschlagung der Plastifizierschnecke mit einer Drehzahl $n_{scr}$ zur Kompensation des Rückstromes $\dot{m}_{druck}$ begonnen wird, was sich positiv auf die Bauteilqualität auswirkt.

Zur Ermittlung geeigneter Werte für die Proportionalitätsfaktoren $k_1=f_v$ und $k_2=f_p$ kann - wie vorbeschrieben - iterativ vorgegangen werden. Hierzu wird wie oben beschrieben zunächst unter Zuhilfenahme einer Rückstromsperre in einem Lernprozess mindestens ein Gutteil erzeugt.

Mit einem Feldversuch unter Verwendung verschiedener Werte für den Proportionalitätsfaktor $k_1=f_v$ und für den Proportionalitätsfaktor $k_2=f_p$ kann iterativ ein optimales Wertepaar für die Faktoren $f_p$ und $f_v$ ermittelt werden. Mit dem so ermittelten Wertepaar für die Faktoren $f_v$ und $f_p$ kann in einer Produktionsphase ohne Verwendung einer Rückstromsperre das erfindungsgemäße Verfahren zum Betreiben einer Spritzgießmaschine 1 durchgeführt werden.

Während der Nachdruckphase hat es sich als zweckmäßig erwiesen, die Drehzahl $n_{scr}$ nach der Gleichung

$$n_{scr}=f_{p\_pck}{}^*p_{s\_pck}$$

zu ermitteln. Dabei sind:

$n_{scr}$: eine einzustellende oder anzusteuernde Drehzahl $n_{scr}$ der Plastifizierschnecke 3 während der Nachdruckphase;

$f_{p\_pck}$: ein Proportionalitätsfaktor $k_3=f_{p\_pck}$ während der Nachdruckphase. Er hat die Einheit $min^{-1}/bar$ und

$p_{s\_pck}$: ein Massedruck der Schmelze 14 während der Nachdruckphase (Nachdruck).

Zur Bestimmung eines geeigneten Wertes für den Proportionalitätsfaktor $k_3=f_{p\_pck}$ kann analog zur Bestimmung der Faktoren $f_p$ und $f_v$ eine iterative Bestimmung eines geeigneten Wertes für den Faktor $k_3=f_{p\_pck}$ in einer Lernphase erfolgen. Hierzu werden in einem Feldversuch unter Verwendung unterschiedlicher Werte für den Faktor $k_3=f_{p\_pck}$ Versuchsteile hergestellt und mit einem oder mehreren Gutteilen, die unter Verwendung einer Rückstromsperre hergestellt wurden, verglichen. Liegt ein Versuchsteil, welches unter Verwendung eines bestimmten Faktors $k_3=f_{p\_pck}$ hergestellt wurde innerhalb eines Toleranzbandes um das Gutteil, beispielsweise hinsichtlich des Bauteilgewichts, so kann der für das entsprechende Versuchsteil verwendete Faktor $k_3=f_{p\_pck}$ für die Produktionsphase zur Herstellung des Bauteiles nach dem erfindungsgemäßen Verfahren ohne Verwendung einer Rückstromsperre verwendet werden.

Eine Alternative Methode zur Bestimmung der Werte für die Proportionalitätsfaktoren $k_1=f_v$, $k_2=f_p$ und $k_3=f_{p\_pck}$ basiert auf der Verwendung des Ausbringungsfaktors AF. Der Ausbringungsfaktor AF ist ein für eine bestimmte Formmasse empirisch ermittelter und bekannter Wert. Der Ausbringungsfaktor ist definiert als:

$$AF = \frac{m}{V_{str}};$$

mit:

AF: Ausbringungsfaktor in der Einheit g/cm$^3$,
m: Formteilmasse in der Einheit g und
$V_{str}$: Hubvolumen in cm$^3$ der durch die Plastifizierschnecke 3 verdrängten Schmelze 14.

Der Ausbringungsfaktor AF berücksichtigt dabei eine Volumenänderung der Formmasse beim Übergang von der Schmelze 14 hin zum Festkörper sowie ein Schließverhalten einer gut funktionierenden Rückstromsperre.
In der nachfolgend aufgeführten Tabelle 1 ist der Ausbringungsfaktor AF für gängige Formmassen angegeben.

| Formmasse: | Ausbringungsfaktor AF: |
|---|---|
| PP | 0,72 |
| HDPE | 0,73 |
| LDPE | 0,70 |
| PC | 0,98 |
| ABS | 0,88 |
| PS | 0,91 |
| PA | 0,91 |
| PA6 | 0,93 |
| PA66 | 1,15 |
| POM | 1,10 |
| PMMA | 0,94 |
| PC/PBT | 1,04 |

Zum Zwecke der Bestimmung der Proportionalitätsfaktoren $k_1=f_v$, $k_2=f_p$ und/oder $k_3=f_{p\_pck}$ wird nunmehr vereinfacht angenommen, dass der mit dem erfindungsgemäßen Verfahren erreichte Ausbringungsfaktor $AF_{inv}$ gleich einem bekannten Ausbringungsfaktor AF einer bestimmten Formmasse sein soll. Ist dies der Fall, kann angenommen werden, dass mit den gewählten Faktoren $k_1=f_v$, $k_2=f_p$ und/oder $k_3=f_{p\_pck}$ und den hieraus resultierenden Drehzahlen $n_{scr}$ während der Einspritz- und/oder Nachdruckphase die Wirkung einer Rückstromsperre durch Beeinflussung der Drehzahl $n_{scr}$ während des Formfüllvorganges erreicht wird, auch wenn - wie beim erfindungsgemäßen Verfahren vorgesehen - keine Rückstromsperre verwendet wird.
Im Folgenden wird anhand von Figur 6 beispielhaft ein Übergang der Steuerung der Drehzahl $n_{scr}$ von einer geschwindigkeitsabhängig gesteuerten Drehzahl $n_{scr}$ hin zu einer druckabhängig gesteuerten Drehzahl $n_{scr}$ aufgezeigt.
Figur 6 zeigt auf der Abszisse 100 einen kurzen Zeitabschnitt eines Spritzgießzyklusses am Beginn der Einspritzphase in einem Zeitfenster von t=2,0s bis t=2,5s. Auf der ersten Ordinate 101 ist der Massedruck $p_s$ in bar aufgetragen. Auf der zweiten Ordinate 102 ist die Schneckenposition s in mm aufgetragen. Auf der dritten Ordinate 106 ist die Drehzahl $n_{scr}$ in Umdrehungen/Minute (min$^{-1}$) aufgetragen. Der Verlauf des Massedruckes $p_s$ über der Zeit t ist in Form der durchgezogenen Linie 107 dargestellt. Die Schneckenposition s ist in Form der gestrichelten Linie 103 dargestellt. Die Drehzahl $n_{scr}$ ist in Form von punktierten Linien 108a, 108b und 108c für unterschiedliche Proportionalitätsfaktoren $f_v$ und $f_p$ dargestellt.
Zum Zeitpunkt t=2,0s beträgt die Schneckenposition s etwa 60mm. Dies entspricht der Ausgangsstellung der Plastifizierschnecke 3 vor dem Beginn der Einspritzphase. Ab einem Zeitpunkt t≥2,5s verringert sich die Schneckenposition s kontinuierlich mit gleichbleibendem Gefälle bis zu einer Schneckenposition s=38mm zu einem Zeitpunkt t=2,5s. Das Gefälle der gestrichelten Linie 103 ist dabei konstant und entspricht der translatorischen Vorschubgeschwindigkeit von $v_{inj}$=50mm/s. Verzögert zur Bewegung der Plastifizierschnecke 3 beginnt bei einem Zeitpunkt von t=2,8s der Massedruck $p_s$ anzusteigen. Die zeitliche Verzögerung zwischen dem Beginn der translatorischen Schneckenbewegung und einem Druckanstieg des Massedruckes $p_s$ tritt ein, weil die Plastifizierschnecke 3 ausgehend von ihrer Startposition eine gewisse Strecke überwinden muss, bis sie auf die Schmelze 14 auftrifft und erst dann in der Schmelze 14 einen Druckanstieg verursacht. Im Ausführungsbeispiel gemäß Figur 6 steigt im weiteren zeitlichen Verlauf der Massedruck $p_s$ an und erreicht bei t=2,5s ein Plateau bei ungefähr $p_s$=750 bar.

Die Drehzahlsteuerung der Drehzahl $n_{scr}$ ist im Ausführungsbeispiel gemäß Figur 6 für einen ersten Proportionalitätsfaktor $k_1$=$f_v$=1,5 sowie für drei verschiedene zweite Proportionalitätsfaktoren $k_2$=$f_p$=0,1, $k_2$=$f_p$=0,15 und $k_2$=$f_p$=0,2 dargestellt.

Zu Beginn der Einspritzphase verlaufen die punktierten Linien 108a, 108b, 108c für die Drehzahl $n_{scr}$ deckungsgleich oder nahezu deckungsgleich. In diesem Bereich, der etwa eine Zeitspanne von t=2,05s bis t=2,2s umfasst, ist die Drehzahl $n_{scr}$ in Abhängigkeit der Vorschubgeschwindigkeit $v_{inj}$ gesteuert. Ab einem Punkt $P_1$, der im Ausführungsbeispiel gemäß Figur 6 bei etwa t=2,2s liegt, übersteigt das Produkt aus dem Proportionalitätsfaktor $f_p$=0,2 und dem Massedruck $p_s$ das Produkt aus dem Proportionalitätsfaktor $f_v$=1,5 und der translatorischen Vorschubgeschwindigkeit $v_{inj}$, sodass zeitlich nach dem Punkt $P_1$ die Drehzahl $n_{scr}$ (punktierte Linie 108a) druckgesteuert eingestellt wird. Für den Drehzahlverlauf $n_{scr}$ gemäß der punktierten Linie 108a stellt somit der Punkt $P_1$ den Umschaltpunkt von der geschwindigkeitsabhängigen Steuerung der Drehzahl $n_{scr}$ hin zur druckabhängigen Steuerung der Drehzahl $n_{scr}$ dar.

Zeitlich etwas später, etwa bei t=2,24s, ist ein zweiter Umschaltpunkt $P_2$ angeordnet. Ab diesem Umschaltpunkt $P_2$ wird die Drehzahl $n_{scr}$ für einen beispielhaft ausgewählten Proportionalitätsfaktor $f_p$=0,15 druckgesteuert bestimmt und eingestellt. Während der Anfangsphase der Einspritzphase bis zum Umschaltpunkt P2 hin erfolgt die Drehzahlsteuerung für das Beispiel $f_p$=0,15 geschwindigkeitsgesteuert unter Verwendung des Proportionalitätsfaktors $f_v$=1,5.

Die punktierte Linie 108c zeigt im Ausführungsbeispiel gemäß Figur 6 den Fall, dass die Drehzahl $n_{scr}$ ausschließlich geschwindigkeitsabhängig gesteuert wird, da an keiner Stelle des in Figur 6 gezeigten Ausschnittes der Einspritzphase der Massedruck $p_s$ ausreichend hoch ist, um von der geschwindigkeitsabhängig gesteuerten Drehzahl in eine druckabhängig gesteuerte Drehzahl umzuschalten.

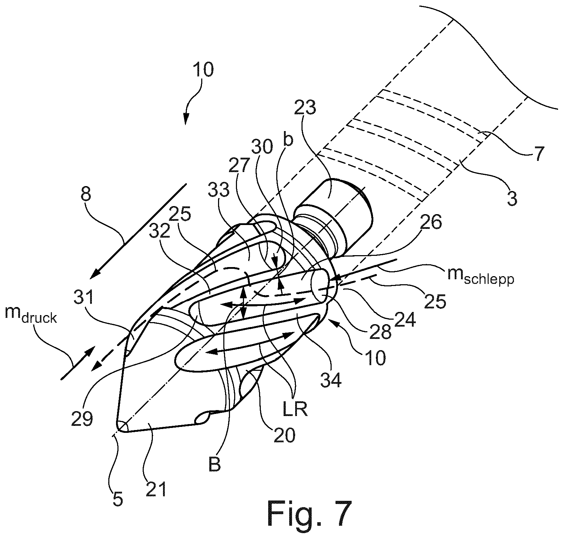

Im Folgenden wird anhand von Figur 7 ein erstes Ausführungsbeispiel eines Schneckenkopfes 10 zur Verwendung beim erfindungsgemäßen Verfahren näher erläutert. Der Schneckenkopf 10, insbesondere zum Durchführen des erfindungsgemäßen Verfahrens, weist einen Schneckenkörper 20 und eine Schneckenspitze 21 auf. Gegenüberliegend zur Schneckenspitze 21 weist der Schneckenkopf 10 einen Anbindungsbereich 23 auf, mittels dem der Schneckenkopf 10 mit der Plastifizierschnecke 3 drehfest relativ zur Längsachse 5 verbindbar ist. Der Schneckenkörper 20 weist zumindest einen radial außen offenen Strömungskanal 24 auf. Durch diesen Strömungskanal 24 kann Schmelze 14, welche Schneckengänge 7 der Plastifizierschnecke 3 verlässt, entlang eines Fließweges 25 in einem Bereich vor der Schneckenspitze 21 (Schneckenvorraum 9) gelangen.

Hierzu ist der Strömungskanal 24 aus spiralförmig zumindest teilweise in ihrer Längsrichtung LR überlappend nebeneinander verlaufenden Sacknuten 26, 27 gebildet, wobei eine erste Sacknut 26 an einem bezüglich der Förderrichtung 8 stromaufwärts liegenden Ende 28 für Schmelzeeintritt offen ist und an einem stromabwärts liegenden Ende 29 für Schmelzeaustritt geschlossen ist. Eine zweite Sacknut 27 ist an einem stromaufwärts liegenden Ende 30 für Schmelzeeintritt geschlossen und an ihrem stromabwärts liegenden Ende 31 für Schmelzeaustritt offen. Die Sacknuten 26, 27 sind in ihrem in Längsrichtung LR überlappenden Bereich durch einen Schersteg 32 voneinander getrennt, wobei der Schersteg 32 in seiner Höhe, insbesondere gemessen gegenüber einem Nutgrund 33 der Sacknuten 26, 27, derart bemessen ist, dass ein Scherspalt zu einem dem Schneckenkopf 10 umgebenden Plastifizierzylinder 2 (vgl. Figur 1; 2) gebildet ist. Hierdurch ist ein Überströmen von Schmelze 14 aus der ersten Sacknut 26 über den Schersteg 32 in die Sacknut 27 ermöglicht. Schmelze 14 tritt somit entlang des gestrichelt dargestellten Fließwegs 25 in die erste Sacknut 16 ein, überströmt den Schersteg 32 und durchströmt die zweite Sacknut 27, an deren offenen Ende die Schmelze 14 den Schneckenkopf 10 verlassen kann.

Ein Sacknutenpaar 26, 27, welches den Fließweg 25 bildet, ist gegenüber einem benachbarten Sacknutenpaar durch einen Sperrsteg 34 abgetrennt. Der Sperrsteg 34 ist hinsichtlich seiner Höhe derart bemessen, dass der Sperrsteg 34 gegenüber dem Schersteg 32 höher ausgebildet ist. Insbesondere bildet der Sperrsteg 34 den Außendurchmesser des Schneckenkörpers 20 und ist somit maßgeblich für ein radiales Schneckenspiel des Schneckenkopfes 10 innerhalb des Plastifizierzylinders 2 (nicht gezeigt in Figur 7).

Die Sacknuten 26, 27 weisen insbesondere eine Gangsteigung von t/D von mehr als 1,5 insbesondere mehr als 2,0 auf. Hierbei ist t eine axiale Länge, die eine gedacht vollständige spiralförmige Sacknut entlang der Plastifizierschnecke 3 bzw. des Schneckenkörpers 20 einnehmen würde. D ist der Außendurchmesser des Schneckenkörpers 20 bzw. der Schneckendurchmesser der Plastifizierschnecke 3. In den gezeigten Ausführungsbeispielen des Schneckenkopfes 10 gemäß den Figuren 3 bis 6 sind die Sacknuten 26, 27 jedoch nicht als volle Gangspirale ausgebildet, sondern besitzen jeweils eine Längserstreckung, die deutlich weniger als eine volle Gangsteigung beträgt.

Eine Scherspaltweite, das heißt eine lichte Weite zwischen dem Schersteg 32 und der umgebenden Zylinderwandung des Plastifizierzylinders 2 (nicht gezeigt in Figur 7) beträgt bevorzugt mindestens das Doppelte des radialen Schneckenspiels des Schneckenkörpers 20 zum Plastifizierzylinder 2. Eine Stegbreite b des Schersteges 32 beträgt wenigstens das 0,2-fache einer Nutbreite B einer Sacknut 26, 27 und bevorzugt höchstens das 0,4-fache der Nutbreite B der Sacknut 26, 27. In der Praxis liegt die Stegbreite b z. B. im Bereich zwischen 3mm und 10mm.

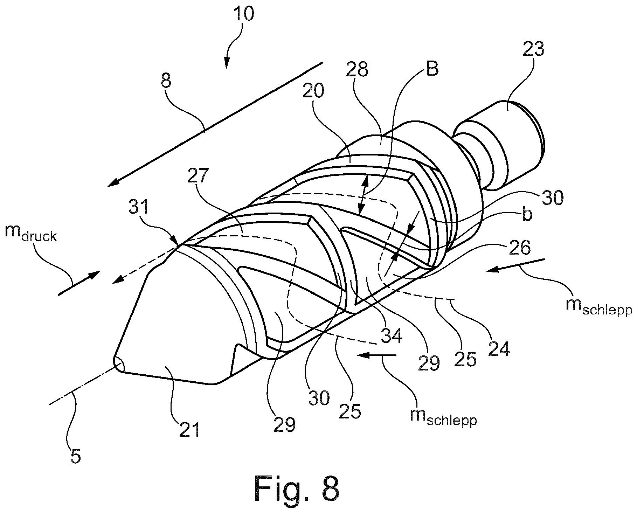

In einer weiteren Ausführungsform gemäß Figur 8 ist der Schneckenkopf 10 nach Art eines doppelt wirkenden Wendelteils mit zwei nach Art einer zweigängigen Schnecke versetzt zueinander angeordneten Sacknutenpaare ausgebildet. Bei dieser Ausführungsform sind die Sacknuten 26, 27 eines Sacknutenpaares bezüglich ihrer Längserstreckung entlang der Förderrichtung 8 unterschiedlich lange ausgebildet. Der Fließweg 25 ist schematisch mit gestrichelten Linien vergleichbar zur Figur 3 dargestellt. In Längsrichtung ist eine erste Sacknut 26 eines ersten Sacknutpaares von einer zweiten Sacknut 27 eines zweiten Sacknutpaares über einen im Wesentlichen in Umfangsrichtung verlaufenden Sperrsteg 34 voneinander getrennt.

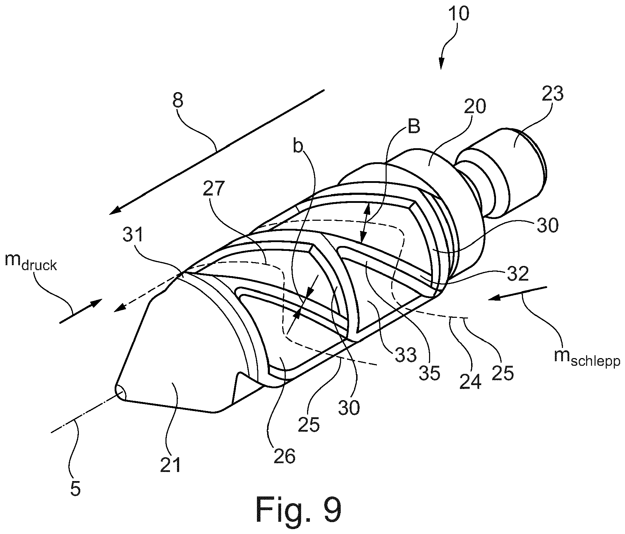

Eine Weiterbildung des Schneckenkopfes 10 gemäß Figur 8 ist in Figur 9 dargestellt. Der Schneckenkopf 10 gemäß Figur 5 unterscheidet sich dadurch, dass Seiten 35 der Scherstege 32, die entgegen des Fließwegs 25 weisen, eine Fase aufweisen, deren Fasenwinkel relativ zu einer gedachten nicht angefasten Seite 35, z. B. <20° ist. In einer besonderen Ausführungsform gemäß Figur 9 sind die Seiten 35 derart angeschrägt angefast, dass die Fase nahezu bis zum Nutgrund 33 reicht. Im Übrigen entspricht der Schneckenkopf 10 gemäß Figur 9 der Ausführung des Schneckenkopfs 10 gemäß Figur 8. Durch eine Anfasung der Seiten 35 im oben beschriebenen Sinne ist die Überströmung des Schersteges 32 entlang des Fließwegs 35 positiv beeinflussbar.

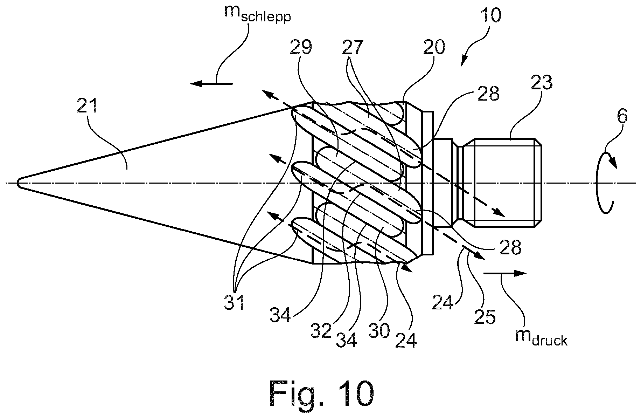

Eine vierte Ausführungsform des Schneckenkopfes 10 gemäß Figur 10 zeichnet sich dadurch aus, dass eine axiale Länge der Schneckenspitze 21 größer ist als eine axiale Länge des Schneckenkörpers 20, der die Sacknuten 26, 27 aufweist. Bei allen Schneckenköpfen 10 gemäß Figuren 7 bis 10 handelt es sich um sogenannte förderwirksame Schneckenköpfe 10, die bei einem rotatorischen Antrieb in Rotationsrichtung 6 die Eigenschaft haben, dass Schmelzematerial in Förderrichtung 8 gefördert wird. Der Einsatz eines solchen Schneckenkopfes 10 ist beim erfindungsgemäßen Verfahren besonders sinnvoll, da eine den Schmelzefluss über den Schneckenkopf 10 hinweg sperrende Rückstromsperre nicht erforderlich ist bzw. in keinem Fall vorhanden ist.

**Bezugszeichenliste**

| | |
|---|---|
| 1 | Spritzgießmaschine |
| 2 | Plastifizierzylinder |
| 3 | Plastifizierschnecke |
| 4 | Hubrichtung |
| 5 | Längsachse |
| 6 | Rotationsrichtung |
| 7 | Schneckengänge |
| 8 | Förderrichtung |
| 9 | Schneckenvorraum |
| 10 | Schneckenkopf |
| 11 | Einspritzdüse |
| 12 | Kanal |
| 13 | Ventil |
| 14 | Schmelze |
| | |
| 20 | Schneckenkörper |
| 21 | Schneckenspitze |
| 23 | Anbindungsbereich |
| 24 | Strömungskanal |
| 25 | Fließweg |
| 26 | erste Sacknut |
| 27 | zweite Sacknut |
| 28 | Ende |
| 29 | Ende |
| 30 | Ende |
| 31 | Ende |
| 32 | Schersteg |
| 33 | Nutgrund |
| 34 | Sperrsteg |
| 35 | Seiten |

| | |
|---|---|
| 100 | Abszisse |
| 101 | erste Ordinate |
| 102 | zweite Ordinate |
| 103 | gestrichelte Linie (s) |
| 104 | durchgezogene Linie ($n_{scr}$) |
| 105 | Umschaltpunkt des Spritzgießprozesses |
| 106 | dritte Ordinate |
| 107 | durchgezogene Linie (Massedruck $p_s$) |
| 108a, | punktierte Linie ($n_{scr}$) |
| 108b, | punktierte Linie ($n_{scr}$) |
| 108c | punktierte Linie ($n_{scr}$) |
| 109 | erstes Maximum |
| 110 | zweites Maximum |
| 111 | drittes Maximum |

| | |
|---|---|
| b | Stegbreite |
| B | Nutbreite |
| LR | Längsrichtung |
| t | Zeit |
| D | Schneckendurchmesser |
| $p_s$ | Massedruck |
| $p_{s\_pck}$ | Massedruck in der Nachdruckphase (Nachdruck) |
| $p_{stau}$ | Massedruck in der Plastifizierphase (Staudruck) |
| $v_{inj}$ | Vorschubgeschwindigkeit (translatorisch) |
| $n_{scr}$ | Drehzahl |
| $\dot{m}_{schlepp}$ | Gegenförderstrom |
| $\dot{m}_{druck}$ | Rückstrom |
| $\dot{m}_\Delta$ | Differenzstrom |
| $T_s$ | Schmelzetemperatur |
| $v_s$ | Schmelzeviskosität |
| $t/D$ | Gangsteigerung |
| $h_{sperr}$ | Höhe Sperrstege |
| $h_{scher}$ | Höhe Scherstege |
| $M_{plst}$ | Drehmoment |
| $k_1=f_v$, $k_2=f_p$, $k_3=f_{p\ pck}$ | Proportionalitätsfaktor |

| | |
|---|---|
| AF | Ausbringungsfaktor |
| s | Schneckenposition |
| $P_1$ | erster Umschaltpunkt |
| $P_2$ | zweiter Umschaltpunkt |

**Patentansprüche**

1. Verfahren zum Betreiben einer Spritzgießmaschine, aufweisend zumindest eine Plastifiziereinrichtung (2, 3) mit zumindest einer Plastifizierschnecke (3), welche um eine Schneckenlängsachse (5) rotatorisch und entlang der Schneckenlängsachse (5) translatorisch bewegbar antreibbar ist, wobei mittels der Plastifiziereinrichtung (2, 3) Kunststoffschmelze (14) zum Einspritzen in eine Formkavität in einem Schneckenvorraum (9) bereitgestellt wird, **dadurch gekennzeichnet, dass**

zum Einspritzen der Kunststoffschmelze (14) in die Formkavität, d. h. zumindest während einer Einspritzphase und während einer Nachdruckphase die Plastifizierschnecke (3) mittels zumindest einer Antriebseinrichtung sowohl translatorisch als auch rotatorisch angetrieben wird, wobei der rotatorische Antrieb der Plastifizierschnecke (3) mit einer Drehzahl ($n_{scr}$) derart erfolgt, dass ein Rückstrom ($\dot{m}_{druck}$) der Schmelze vom Schneckenvorraum (9) zurück in Schneckengänge (71) der Plastifizierschnecke (3) aufgrund einer translatorischen Einspritzbewegung der Plastifizierschnecke (3) durch einen durch die Rotation der Plastifizierschnecke (3) bewirkten Gegenförderstrom ($\dot{m}_{schlepp}$) überlagert wird, wobei ein Differenzstrom ($\dot{m}_\Delta$) aus Rückstrom ($\dot{m}_{druck}$) und Gegenförderstrom ($\dot{m}_{schlepp}$) entsteht und der Differenzstrom ($\dot{m}_\Delta$) zumindest während der Einspritzphase durch Beeinflussung der Drehzahl ($n_{scr}$) der Plastifizierschnecke (3) beeinflusst wird und das Verfahren ohne Verwendung einer Rückstromsperre durchgeführt wird.

**2.** Verfahren nach Anspruch 1,
**dadurch gekennzeichnet, dass**
der Differenzstrom $\dot{m}_\Delta > 0$ ist, was gleichbedeutend damit ist, dass der Gegenförderstrom ($\dot{m}_{schlepp}$) größer als der Rückstrom ($\dot{m}_{druck}$) ist.

**3.** Verfahren nach Anspruch 1,
**dadurch gekennzeichnet, dass**
der Differenzstrom $\dot{m}_\Delta = 0$ ist, was gleichbedeutend damit ist, dass der Rückstrom ($\dot{m}_{druck}$) im Vergleich zum Gegenförderstrom ($\dot{m}_{schlepp}$) gleichgroß ist.

**4.** Verfahren nach Anspruch 1,
**dadurch gekennzeichnet, dass**
der Differenzstrom $\dot{m}_\Delta < 0$ ist, was gleichbedeutend damit ist, dass der Rückstrom ($\dot{m}_{druck}$) größer als der Gegenförderstrom ($\dot{m}_{schlepp}$) ist.

**5.** Verfahren nach einem der vorangegangenen Ansprüche,
**dadurch gekennzeichnet, dass**
die Drehzahl ($n_{scr}$) in Abhängigkeit von zumindest einer Schmelzekenngröße bestimmt wird und gesteuert oder die Drehzahl ($n_{scr}$) während der Einspritzphase- und/oder während der Nachdruckphase eines einzelnen Zyklus adaptiv an die zumindest eine Schmelzekenngröße angepasst wird.

**6.** Verfahren nach einem der vorangegangenen Ansprüche,
**dadurch gekennzeichnet, dass**
als Schmelzekenngröße der Massedruck ($p_s$, $p_{s\_pck}$, $p_{stau}$) im Schneckenvorraum (9), ein Massedruck ($p_{Cavity}$) im Inneren der Formkavität, eine Schmelzeviskosität ($v_S$), eine Schmelzetemperatur ($T_S$) und/oder ein Plastifizierdrehmoment ($M_{plst}$) und/oder ein Drehmoment der Plastifizierschnecke (3) während der Einspritz- und Nachdruckphase ($M_{plstinj}$) verwendet werden.

**7.** Verfahren nach einem der vorangegangenen Ansprüche,
**dadurch gekennzeichnet, dass**
der Rückstrom ($\dot{m}_{druck}$), der Gegenförderstrom ($\dot{m}_{schlepp}$) und der daraus resultierende Differenzstrom ($\dot{m}_\Delta$) Masseströme oder Volumenströme der Schmelze (14) sind.

**8.** Verfahren nach einem der vorangegangenen Ansprüche,
**dadurch gekennzeichnet, dass**
in Abhängigkeit der absoluten Größe des Differenzstromes ($\dot{m}_\Delta$) der translatorische Hubweg der Plastifizierschnecke (3) zumindest während der Einspritzphase beeinflusst wird, derart, dass

a) der translatorische Hubweg der Plastifizierschnecke (3) gegenüber einer theoretischen Nulllage verlängert wird, wenn der Differenzstrom $\dot{m}_\Delta < 0$ ist oder
b) der translatorische Hubweg der Plastifizierschnecke (3) gegenüber einer theoretischen Nulllage verkürzt wird, wenn der Differenzstrom $\dot{m}_\Delta > 0$ ist.

**9.** Verfahren nach einem der vorangegangenen Ansprüche,
**dadurch gekennzeichnet, dass**
das Verfahren gemäß Anspruch 1 während der gesamten Einspritzphase und/oder während der gesamten Nachdruckphase durchgeführt wird.

**10.** Verfahren nach einem der vorangegangenen Ansprüche,
**dadurch gekennzeichnet, dass**
zur Beeinflussung, insbesondere zur Konstanthaltung des Differenzstroms ($\dot{m}_\Delta$) während der Einspritzphase und/oder während der Nachdruckphase ein und desselben Spritzgusszyklus die Drehzahl ($n_{scr}$) der Plastifizierschnecke (3) über die Zeit (t) variiert wird.

**11.** Verfahren nach einem der vorangegangenen Ansprüche,
**dadurch gekennzeichnet, dass**

die Drehzahl ($n_{scr}$) proportional zur Vorschubgeschwindigkeit ($v_{inj}$) der Plastifizierschnecke (3) in translatorischer Richtung oder proportional zum Massedruck ($p_s$; $p_{s\_pck}$), insbesondere gemessen im Schneckenvorraum (9) oder hinter einem Schneckenschaft, vorgegeben wird.

**12.** Verfahren nach einem der vorangegangenen Ansprüche,
**dadurch gekennzeichnet, dass**
mit Beginn der Einspritzphase mit einem Faktor ($k_1=f_v$) die Drehzahl ($n_{scr}$) in Abhängigkeit der Vorschubgeschwindigkeit ($v_{inj}$) mit $n_{scr}=v_{inj}*k_1$ vorgesteuert wird, bis die Plastifizierschnecke (3) auf die Schmelze auftrifft, sodass der Massedruck ($p_s$) ansteigt und wobei die Drehzahl ($n_{scr}$) mit einem Faktor $k_2=f_p$ über das Produkt $n_{scr}=p_s*k_2$ eingestellt wird, wenn das Produkt $n_{scr}=p_s*k_2$ größer ist als das Produkt $n_{scr}=v_{inj}*k_1$ und wobei in der Nachdruckphase die Drehzahl ($n_{scr}$) mit einem Faktor $k_3=f_{p\_pck}$ über ein Produkt $n_{scr}=k_3*p_{s\_pck}$ eingestellt wird.

**13.** Verfahren nach einem der vorangegangenen Ansprüche,
**dadurch gekennzeichnet, dass**
die Drehzahl ($n_{scr}$) während der Einspritzphase und während der Nachdruckphase als einstellbares Profil vorgegeben wird.

**14.** Verfahren nach einem der vorangegangenen Ansprüche,
**dadurch gekennzeichnet, dass**
während der Nachdruckphase ein Nachdruck der Schmelze (14) zumindest teilweise über die Rotation der Plastifizierschnecke (3) erzeugt wird.

**15.** Verfahren nach einem der vorangegangenen Ansprüche,
**dadurch gekennzeichnet, dass**
die Drehzahl ($n_{scr}$) zur Erhöhung eines Ausbringungsfaktors (AF) und somit eines Schussgewichtes bei vorgegebenen Schneckendurchmesser (D) erhöht wird.

**16.** Verfahren nach einem der vorangegangenen Ansprüche,
**dadurch gekennzeichnet, dass**
die Drehzahl ($n_{scr}$) der Plastifizierschnecke (3) bauteilspezifisch zur Anpassung einer optimalen Fließfrontgeschwindigkeit der Schmelze innerhalb der Kavität geregelt oder gesteuert wird.

**17.** Verfahren nach einem der vorangegangenen Ansprüche,
**dadurch gekennzeichnet, dass**
zumindest während eines Teils der Einspritzphase die Drehzahl ($n_{scr}$) proportional zum Massedruck ($p_s$) mit dem Faktor $k_2=f_p$ bestimmt und eingestellt wird, wobei gilt:

$$n_{scr}=f_p*p_s,$$

wobei der Massedruck ($p_s$) gemessen wird und $k_2=f_p$ ein prozessspezifisch ermittelter Proportionalitätsfaktor ist.

**18.** Verfahren nach einem der vorangegangenen Ansprüche,
**dadurch gekennzeichnet, dass**
zumindest während eines Teils der Einspritzphase die Drehzahl ($n_{scr}$) proportional zur Vorschubgeschwindigkeit ($v_{inj}$) mit dem Faktor $k_1=f_v$ bestimmt und eingestellt wird, wobei gilt:

$$n_{scr}=f_v*v_{inj},$$

wobei die Vorschubgeschwindigkeit ($v_{inj}$) gemessen oder aus Prozessdaten ermittelt wird und $k_1=f_v$ ein prozessspezifisch ermittelter Proportionalitätsfaktor ist.

**19.** Verfahren nach einem der vorangegangenen Ansprüche,
**dadurch gekennzeichnet, dass**
zumindest während eines Teils der Nachdruckphase die Drehzahl ($n_{scr}$) der Plastifizierschnecke (3) proportional zum Massedruck ($p_{s\_pck}$) in der Nachdruckphase mit dem Faktor $k_3=f_{p\_pck}$ bestimmt und eingestellt wird, wobei gilt:

$$n_{scr}=f_{p\_pck}*p_{s\_pck},$$

wobei der Massedruck ($p_{s\_pck}$) in der Nachdruckphase gemessen wird und $k_3=f_{p\_pck}$ ein prozessspezifisch ermittelter Proportionalitätsfaktor ist.

**20.** Verfahren nach einem der vorangegangenen Ansprüche,
**dadurch gekennzeichnet, dass**
die Drehzahl ($n_{scr}$) in der Einspritzphase nach der Gleichung

$$n_{scr}=f_v*v_{inj}$$

bestimmt und eingestellt wird, wenn gilt:

$$f_v*v_{inj}>f_p*p_s$$

und/oder die Drehzahl ($n_{scr}$) in der Einspritzphase nach der Gleichung

$$n_{scr}=f_p*p_s$$

bestimmt und eingestellt wird, wenn gilt:

$$f_v*v_{inj}<f_p*p_s.$$

**21.** Verfahren nach einem der vorangegangenen Ansprüche,
**dadurch gekennzeichnet, dass**
die Proportionalitätsfaktoren $k_1=f_v$ und/oder $k_2=f_p$ und/oder $k_3=f_{p\_pck}$ prozessspezifisch in einer Lernphase ermittelt werden.

**Claims**

**1.** A method for operating an injection moulding machine, comprising at least one plasticising device (2, 3) with at least one plasticising screw (3), which can be driven about a screw longitudinal axis (5) in both a rotationally and a translationally movable manner, wherein by means of the plasticising device (2, 3) plastic melt (14) is provided for injecting into a mould cavity in a screw antechamber (9),
**characterised in that**
in order to inject the plastic melt (14) into the mould cavity, i.e. at least during an injection phase and during a holding-pressure phase, the plasticising screw (3) is driven both translationally and rotationally by means of at least one drive unit, wherein the rotational drive of the plasticising screw (3) is effected at a speed ($n_{scr}$) such that a backflow ($\dot{m}_{druck}$) of the melt from the screw antechamber (9) back into the screw threads (71) of the plasticising screw (3) is overlaid by an opposing delivery flow ($\dot{m}_{schlepp}$) caused by the rotation of the plasticising screw (3) due to a translational injection movement of the plasticising screw (3), wherein a differential flow ($\dot{m}_\Delta$) is created from the backflow ($\dot{m}_{druck}$) and the opposing delivery flow ($\dot{m}_{schlepp}$) and the differential flow ($\dot{m}_\Delta$) is influenced at least during the injection phase by influencing the speed ($n_{scr}$) of the plasticising screw (3), and the method is carried out without the use of a backflow barrier.

**2.** The method according to claim 1,
**characterised in that**
the differential flow is $\dot{m}_\Delta>0$, which is equivalent to the opposing delivery flow ($\dot{m}_{schlepp}$) being greater than the backflow ($\dot{m}_{druck}$).

**3.** The method according to claim 1,
**characterised in that**

the differential flow is $\dot{m}_\Delta=0$, which is equivalent to the backflow ($\dot{m}_{druck}$) being of the same size as the opposing delivery flow ($\dot{m}_{schlepp}$).

4. The method according to claim 1,
   **characterised in that**
   the differential flow is $\dot{m}_\Delta<0$, which is equivalent to the backflow ($\dot{m}_{druck}$) being greater than the opposing delivery flow ($\dot{m}_{schlepp}$).

5. The method according to the preceding claims,
   **characterised in that**
   the speed ($n_{scr}$) is determined and controlled in dependence of at least one melt parameter or the speed ($n_{scr}$) during the injection phase and/or during the holding-pressure phase of a single cycle is adaptively adjusted to the at least one melt parameter.

6. The method according to one of the preceding claims,
   **characterised in that**
   the melt parameter may be the melt pressure ($p_s$, $p_{s\_pck}$, $p_{stau}$) in the screw antechamber (9), a melt pressure ($p_{Cavity}$) inside the mould cavity, a melt viscosity ($v_S$), a melt temperature ($T_S$) and/or a plasticising torque ($M_{plst}$) and/or a torque of the plasticising screw (3) during the injection and holding-pressure phase ($M_{plstinj}$).

7. The method according to one of the preceding claims,
   **characterised in that**
   the backflow ($\dot{m}_{druck}$), the opposing delivery flow ($\dot{m}_{schlepp}$) and the differential flow ($\dot{m}_\Delta$) resulting therefrom are mass (melt) flows or volume flows of the melt (14).

8. The method according to one of the preceding claims,
   **characterised in that**
   the translational flow path of the plasticising screw (3) is influenced, at least during the injection phase, in dependence of the absolute size of the differential flow ($\dot{m}_\Delta$), such that

   a) the translational flow path of the plasticising screw (3) is lengthened in relation to a theoretical zero position, when the differential flow is $\dot{m}_\Delta<0$ or
   b) the translational flow path of the plasticising screw (3) is shortened in relation to a theoretical zero position, when the differential flow is $\dot{m}_\Delta>0$.

9. The method according to one of the preceding claims,
   **characterised in that**
   the method according to claim 1 is carried out throughout the entire injection phase and/or during the entire holding-pressure phase.

10. The method according to one of the preceding claims,
    **characterised in that**
    in order to influence the differential flow ($\dot{m}_\Delta$), in particular in order to keep it constant during the injection phase and/or during the holding-pressure phase of one and the same injection moulding cycle, the speed ($n_{scr}$) of the plasticising screw (3) is varied over the time (t).

11. The method according to one of the preceding claims,
    **characterised in that**
    the speed ($n_{scr}$) is predefined proportionally to the feed speed ($v_{inj}$) of the plasticising screw (3) in translational direction or proportionally to the melt pressure ($p_s$; $p_{s\_pck}$), measured in particular in the screw antechamber (9) or behind a screw shaft.

12. The method according to one of the preceding claims,
    **characterised in that**
    at the start of the injection phase the speed ($n_{scr}$) is pre-controlled with a factor ($k_1=f_v$) in dependence of the feed speed ($v_{inj}$) with $n_{scr}=v_{inj}*k_1$, until the plasticising screw (3) makes contact with the melt, so that the melt pressure ($p_s$) rises and wherein the speed ($n_{scr}$) is set with a factor $k_2=f_p$ via the product $n_{scr}=p_s*k_2$ if the product $n_{scr}=p_s*k_2$ is greater than the product $n_{scr}=v_{inj}*k_1$ and wherein in the holding-pressure phase the speed ($n_{scr}$) is set with a factor

$k_3=f_{p\_pck}$ via a product $n_{scr}=k_3{}^*p_{s\_pck}$.

13. The method according to one of the preceding claims,
    **characterised in that**
    the speed ($n_{scr}$) during the injection phase and during the holding-pressure phase is predefined as an adjustable profile.

14. The method according to one of the preceding claims,
    **characterised in that**
    during the holding-pressure phase a holding pressure of the melt (14) is generated at least partially via the rotation of the plasticising screw (3).

15. The method according to one of the preceding claims,
    **characterised in that**
    the speed ($n_{scr}$), for increasing an output factor (AF) and thus a shot weight, is increased for a predefined screw diameter (D).

16. The method according to one of the preceding claims,
    **characterised in that**
    the speed ($n_{scr}$) of the plasticising screw (3) is regulated or controlled component-specifically for adjusting an optimal flow front speed of the melt within the cavity.

17. The method according to one of the preceding claims,
    **characterised in that**
    at least during a part of the injection phase the speed ($n_{scr}$) is determined and set proportionally to the melt pressure ($p_s$) with the factor $k_2=f_p$, wherein:

$$n_{scr}=f_p{}^*p_s,$$

involving measuring of the melt pressure ($p_s$) and $k_2=f_p$ is a proportionality factor determined in a process-specific manner.

18. The method according to one of the preceding claims,
    **characterised in that**
    at least during a part of the injection phase the speed ($n_{scr}$) is determined and set proportionally to the feed speed ($v_{inj}$) with the factor $k_1=f_v$, wherein:

$$n_{scr}=f_v{}^*v_{inj},$$

involving measuring of the feed speed ($v_{inj}$) or determining the same from process data and $k_1=f_v$ is a proportionality factor determined in a process-specific manner.

19. The method according to one of the preceding claims,
    **characterised in that**
    at least during part of the holding-pressure phase the speed ($n_{scr}$) of the plasticising screw (3) is determined and set proportionally to the melt pressure ($p_{s\_pck}$) in the holding-pressure phase with the factor $k_3=f_{p\_pck}$, wherein:

$$n_{scr}=f_{p\_pck}{}^*p_{s\_pck},$$

involving measuring of the melt pressure ($p_{s\_pck}$) in the holding-pressure phase and $k_3=f_{p\_pck}$ is a proportionality factor determined in a process-specific manner.

20. The method according to one of the preceding claims,
    **characterised in that**
    the speed ($n_{scr}$) is determined and set in the injection phase using the equation

$$n_{scr}=f_v{}^*v_{inj}$$

if:

$$f_v{}^*v_{inj}>f_p{}^*p_s$$

and/or the speed ($n_{scr}$) is determined and set in the injection phase using the equation

$$n_{scr}=f_p{}^*p_s$$

if:

$$f_v{}^*v_{inj}<f_p{}^*p_s.$$

21. The method according to one of the preceding claims,
 **characterised in that**
 the proportionality factors $k_1=f_v$ and/or $k_2=f_p$ and/or $k_3=f_{p\_pck}$ are determined in a process-specific manner in a learning phase.


**Revendications**

1. Procédé pour faire fonctionner une machine de moulage par injection, présentant au moins un dispositif de plastification (2, 3) comprenant au moins une vis sans fin de plastification (3) qui peut être entraînée en rotation sur un axe longitudinal de vis sans fin (5) et en translation le long de l'axe longitudinal de vis sans fin (5), dans lequel de la masse fondue de plastique (14) est fournie au moyen du dispositif de plastification (2, 3) pour l'injection dans une cavité de moule dans une anti-chambre de vis sans fin (9), **caractérisé en ce que**
 pour injecter la masse fondue de plastique (14) dans la cavité de moule, c'est à dire au moins pendant une phase d'injection et pendant une phase de maintien, la vis sans fin de plastification (3) est entraînée tant en translation qu'en rotation au moyen d'au moins un dispositif d'entraînement, dans lequel l'entraînement en rotation de la vis sans fin de plastification (3) est effectué à un nombre de tours ($n_{scr}$) de telle façon qu'un flux de retour ($\dot{m}_{druck}$) de la masse fondue de l'anti-chambre de vis sans fin (9) vers les nervures spiralées (71) de la vis sans fin de plastification (3) dû à un mouvement d'injection en translation de la vis sans fin de plastification (3) soit superposé par un contre-flux ($\dot{m}_{schlepp}$) produit par la rotation de la vis sans fin de plastification (3), dans lequel un flux différentiel ($\dot{m}\Delta$) du flux de retour ($\dot{m}_{druck}$) et du contre-flux ($\dot{m}_{schlepp}$) est produit et le flux différentiel ($\dot{m}_{\Delta}$) est influencé au moins pendant la phase d'injection par le nombre de tours ($n_{scr}$) et le procédé est exécuté sans employer de blocage de flux de retour.

2. Procédé selon la revendication 1,
 **caractérisé en ce que**
 le flux différentiel $\dot{m}_{\Delta}>0$, ce qui signifie également que le contre-flux ($\dot{m}_{schlepp}$) est plus grand que le flux de retour ($\dot{m}_{druck}$).

3. Procédé selon la revendication 1,
 **caractérisé en ce que**
 le flux différentiel $\dot{m}_{\Delta}=0$, ce qui signifie également que le flux de retour ($\dot{m}_{druck}$) est de même grandeur par comparaison avec le contre-flux ($\dot{m}_{schlepp}$).

4. Procédé selon la revendication 1,
 **caractérisé en ce que**
 le flux différentiel $\dot{m}_{\Delta}<0$, ce qui signifie également que le flux de retour ($\dot{m}_{druck}$) est plus grand que le contre-flux ($\dot{m}_{schlepp}$).

5. Procédé selon l'une des revendications précédentes,
 **caractérisé en ce que**

**EP 3 294 519 B1**

le nombre de tours ($n_{scr}$) est déterminé et commandé en fonction d'au moins une caractéristique de masse fondue ou bien le nombre de tours ($n_{scr}$) est adapté de manière adaptative à l'au moins une caractéristique de masse fondue pendant la phase d'injection et/ou pendant la phase de maintien d'un cycle individuel.

6. Procédé selon l'une des revendications précédentes, **caractérisé en ce qu'**en tant que caractéristique de masse fondue, la pression massique (ps1, $P_s$,_$p_{ck1}$, $p_{stau}$) dans l'anti-chambre de vis sans fin (9), une pression massique ($P_{Cavity}$) à l'intérieur de la cavité de moule, une viscosité de masse fondue ($V_s$), une température de masse fondue ($T_s$) et/ou un couple de plastification ($M_{plst}$) et/ou un couple de la vis sans fin de plastification (3) sont employés pendant la phase d'injection et/ou pendant la phase de maintien ($M_{plstinj}$).

7. Procédé selon l'une des revendications précédentes, **caractérisé en ce que** le flux de retour ($\dot{m}_{druck}$), le contre-flux ($\dot{m}_{schlepp}$) et le flux différentiel ($\dot{m}_\Delta$) qui en résulte sont des débits massiques ou des débits volumiques de la masse fondue (14).

8. Procédé selon l'une des revendications précédentes, **caractérisé en ce qu'**en fonction de la grandeur absolue du flux différentiel ($\dot{m}_\Delta$), la course en translation de la vis sans fin de plastification (3) est influencée au moins pendant la phase d'injection de telle sorte que

    a) la course en translation de la vis sans fin de plastification (3) est prolongée par rapport à une position zéro théorique, lorsque le flux différentiel $\dot{m}_\Delta$<0,
    b) la course en translation de la vis sans fin de plastification (3) est réduite par rapport à une position zéro théorique, lorsque le flux différentiel $\dot{m}_\Delta$>0.

9. Procédé selon l'une des revendications précédentes, **caractérisé en ce que** le procédé selon la revendication 1 est exécuté pendant toute la phase d'injection et/ou pendant toute la phase de maintien.

10. Procédé selon l'une des revendications précédentes, **caractérisé en ce que** pour influencer, en particulier pour maintenir constant le flux différentiel ($\dot{m}_\Delta$) pendant la phase d'injection et/ou pendant la phase de maintien d'un seul et même cycle de moulage par injection, le nombre de tours ($n_{scr}$) de la vis sans fin de plastification (3) est varié sur la durée (t).

11. Procédé selon l'une des revendications précédentes, **caractérisé en ce que** le nombre de tours ($n_{scr}$) est prédéfini proportionnellement à la vitesse d'avancement ($V_{inj}$) de la vis sans fin de plastification (3) dans la direction en translation ou proportionnellement à la pression massique ($p_s$,$p_{s\_pck}$), en particulier mesuré dans l'anti-chambre de vis sans fin (9) ou après un arbre de vis sans fin.

12. Procédé selon l'une des revendications précédentes, **caractérisé en ce qu'**avec le début de la phase d'injection avec un facteur ($k_1$=$f_v$), le nombre de tours ($n_{scr}$) est pré-commandé en fonction de la vitesse d'avancement ($V_{inj}$) avec $n_{scr}$=$V_{inj}$*$k_1$ jusqu'à ce que la vis sans fin de plastification (3) arrive sur la masse fondue, de sorte que la pression massique ($p_s$) augmente, et dans lequel le nombre de tours ($n_{scr}$) avec un facteur $k_2$=$f_p$ est réglé par le produit $n_{scr}$=$P_s$*$k_2$, lorsque le produit $n_{scr}$=Ps*$k_2$ est supérieur au produit $n_{scr}$=$V_{inj}$*$k_1$ et dans lequel dans la phase de maintien, le nombre de tours ($n_{scr}$) avec un facteur $k_3$=$f_{p\_pck}$ est réglé par un produit $n_{scr}$=$k_3$*$p_{s\_pck}$.

13. Procédé selon l'une des revendications précédentes, **caractérisé en ce que** le nombre de tours ($n_{scr}$) est prédéfini en tant que profil réglable pendant la phase d'injection et pendant la phase de maintien.

14. Procédé selon l'une des revendications précédentes, **caractérisé en ce que** pendant la phase de maintien, un maintien de la masse fondue (14) est produit au moins partiellement par la rotation de la vis sans fin de plastification (3).

15. Procédé selon l'une des revendications précédentes, **caractérisé en ce que** le nombre de tours ($n_{scr}$) est augmenté pour augmenter un facteur de rendement (AF) et ainsi un poids injectable pour un diamètre de vis sans fin (D) prédéfini.

26

16. Procédé selon l'une des revendications précédentes, **caractérisé en ce que** le nombre de tours ($n_{scr}$) de la vis sans fin de plastification (3) est régulé ou commandé de manière spécifique à la pièce pour adapter une vitesse d'écoulement frontale optimale de la masse fondue à l'intérieur de la cavité.

17. Procédé selon l'une des revendications précédentes, **caractérisé en ce que** pendant au moins une partie de la phase d'injection, le nombre de tours ($n_{scr}$) est déterminé et réglé proportionnellement à la pression massique ($p_s$) avec le facteur $k_2=f_p$, soit

$$n_{scr}=f_p*p_s,$$

dans lequel la pression massique ($p_s$) est mesurée et $k_2=f_p$ est un facteur de proportionnalité calculé de manière spécifique au procédé.

18. Procédé selon l'une des revendications précédentes, **caractérisé en ce que** pendant au moins une partie de la phase d'injection, le nombre de tours ($n_{scr}$) est déterminé et réglé proportionnellement à la vitesse d'avancement (Vinj) avec le facteur $k_1=f_v$, soit

$$n_{scr}=f_v*V_{inj},$$

dans lequel la vitesse d'avancement ($V_{inj}$) est mesurée ou calculée à partir de données de procédé et $k_1=f_v$ est un facteur de proportionnalité calculé de manière spécifique au procédé.

19. Procédé selon l'une des revendications précédentes, **caractérisé en ce que** pendant au moins une partie de la phase de maintien, le nombre de tours ($n_{scr}$) de la vis sans fin de plastification (3) est déterminé et réglé proportionnellement à la pression massique ($p_{s\_pck}$) dans la phase de maintien avec le facteur $k_3=f_{p\_pck}$, soit

$$n_{scr}=f_{p\_pck}*P_{s\_pck},$$

dans lequel la pression massique ($p_{s\_pck}$) est mesurée dans la phase de maintien et $k_3=f_{p\_pck}$ est un facteur de proportionnalité calculé de manière spécifique au procédé.

20. Procédé selon l'une des revendications précédentes, **caractérisé en ce que** le nombre de tours ($n_{scr}$), dans la phase d'injection, est déterminé et réglé selon l'équation

$$n_{scr}=f_v*V_{inj}$$

lorsque vaut

$$f_v*V_{inj}>f_p*p_s$$

et/ou le nombre de tours ($n_{scr}$) dans la phase d'injection, est déterminé et réglé selon l'équation

$$n_{scr}=f_p*p_s$$

lorsque vaut

$$f_v*V_{inj}<f_p*p_s.$$

21. Procédé selon l'une des revendications précédentes, **caractérisé en ce que** les facteurs de proportionnalité $k_1=f_v$ et/ou $k_2=f_p$ et/ou $k_3=f_{p\_pck}$ sont calculés de manière spécifique au procédé au cours d'une phase d'apprentissage.

Fig. 1

Fig. 2

Stand der Technik

Fig. 3

Fig. 4

Fig. 5

EP 3 294 519 B1

Fig. 6

Fig. 7

**Fig. 8**

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5013231 A
- JP 2006142739 A
- US 2004119204 A1
- JP H11207792 A
- US 7713049 B2
- DE 102005007747 B3

- DE 4344335 C2
- EP 1162053 B1
- US 7291297 B2
- DE 3021978 C2
- DE 4238277 C2
- DE 102006033507 A1

**In der Beschreibung aufgeführte Nicht-Patentliteratur**

- **MICHAELI, W.** Einführung in die Kunststoffverarbeitung. Hanser, 2010